(19) Europäisches Patentamt
European Patent Office
Office européen des brevets

(11) **EP 4 318 070 A1**

(12) **EUROPEAN PATENT APPLICATION**
published in accordance with Art. 153(4) EPC

(43) Date of publication:
**07.02.2024 Bulletin 2024/06**

(21) Application number: **22811665.3**

(22) Date of filing: **26.05.2022**

(51) International Patent Classification (IPC):
**G02B 15/14** (2006.01)   **G02B 13/00** (2006.01)
**G02B 15/22** (2006.01)   **G02B 3/00** (2006.01)
**G02B 27/64** (2006.01)   **G02B 1/04** (2006.01)
**H04N 5/225** (2006.01)   **G03B 17/12** (2021.01)

(52) Cooperative Patent Classification (CPC):
**G02B 1/04; G02B 3/00; G02B 13/00; G02B 15/14;
G02B 15/22; G02B 27/64; G03B 17/12;
H04N 23/00**

(86) International application number:
**PCT/KR2022/007492**

(87) International publication number:
**WO 2022/250474 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.05.2021 KR 20210067892**

(71) Applicant: **Samsung Electronics Co., Ltd.
Suwon-si, Gyeonggi-do 16677 (KR)**

(72) Inventors:
• **KWAK, Hokeun
Suwon-si, Gyeonggi-do 16677 (KR)**
• **SHIN, Jeongkil
Suwon-si, Gyeonggi-do 16677 (KR)**

(74) Representative: **Arnold & Siedsma
Bezuidenhoutseweg 57
2594 AC The Hague (NL)**

(54) **LENS ASSEMBLY AND ELECTRONIC DEVICE COMPRISING SAME**

(57)      A lens assembly including a plurality of lenses arranged from an object side to an image side where there is an image plane includes a reflective member that bends a first optical axis of light incident from the object side into a second optical axis, a first lens group arranged on the second optical axis so that the light bent by the reflective member is incident thereon and having a positive refractive power, a second lens group arranged on an image side of the first lens group and having a positive refractive power, and a third lens group arranged on an image side of the second lens group and having a negative refractive power. The first lens group and the third lens group move toward the object side to perform zooming from a wide angle end to a telephoto end.

FIG. 1

EP 4 318 070 A1

## Description

### Technical Field

Various embodiments relate to a lens assembly and an electronic device including the same and, for example, relate to a miniaturized lens assembly and an electronic device including the same.

### Background Art

Various services and additional functions provided by electronic devices have gradually been expanding. Electronic devices, for example, mobile devices or user devices, may provide various services through various sensor modules. Electronic devices may provide multimedia services, for example, photo services or video services. As the use of electronic devices has increased, the use of cameras functionally connected to the electronic devices has also increased. In accordance with such user demand, camera performance and/or resolution of electronic devices have been improved. Cameras of electronic devices may be used to take pictures of various types of landscapes, people, or self-shots. Such multimedia, for example, photos or videos, may be shared on social network sites or other media.

A plurality of optical devices may be mounted on electronic devices in order to improve the quality of captured images and also provide various visual effects to the captured images. For example, images of objects may be obtained through a plurality of cameras (e.g., a telephoto camera and a wide-angle camera) having different optical characteristics and may be combined with each other to obtain captured images. Such optical devices may be mounted on electronic devices (e.g., digital cameras) specialized in an image capturing function and may also be mounted on miniaturized electronic devices (e.g., mobile communication terminals) carried by users.

In order to obtain high-resolution zoom images in small mobile devices, two wide angle and telephoto single-vision lens modules were installed to obtain zoom images, and zoom images were obtained by performing electronic image processing on a middle region between a wide angle end and a telephoto end. Although image processing technology has gradually improved, image quality of a middle end is inevitably lower compared to a wide angle end and a telephoto end that provide optical zoom images. As the zoom magnification of the telephoto end increases, the middle end area that is to be compensated with digital zoom may increase.

### Disclosure

### Technical Problem

A method of reducing a thickness of a lens assembly by including a reflective member (e.g., a prism) in an optical zoom lens in order to bend an optical axis by about 90 degrees has been applied to a small digital camera. However, there have been many proposals to include one lens in front of the reflective member, set the lens surface on the reflective member so that the reflective member has a refractive power, or arrange four or more lens groups to increase a length of an optical system and increase zoom magnification. However, such a zoom lens has limitations in miniaturization, and thus, it is difficult to install the zoom lens in a small mobile device and it is difficult to configure a telephoto end to be bright (small F number (Fno)).

Various embodiments provide an optical lens assembly capable of obtaining a zoom image in a small mobile device without deteriorating image quality, and a method of configuring a small lens assembly that may be mounted on the small mobile device while maintaining the design of the small mobile device.

Various embodiments may provide a small lens assembly in, for example, an electronic device (e.g., a portable terminal).

In addition, various embodiments may provide an electronic device including, for example, a small lens assembly.

Technical Solution

In order to solve the above or other problems, according to an embodiment, a lens assembly including a plurality of lenses arranged from an object side to an image side where there is an image plane may include a reflective member that bends a first optical axis of light incident from the object side into a second optical axis, a first lens group arranged on the second optical axis so that the light bent by the reflective member is incident thereon and having a positive refractive power, a second lens group arranged on an image side of the first lens group and having a positive refractive power, and a third lens group arranged on an image side of the second lens group and having a negative refractive power, wherein the first lens group and the third lens group may move toward the object side to perform zooming from a wide angle end to a telephoto end, the first lens group may include a first lens arranged closest to the object side and a second lens arranged on an image side of the first lens, the first lens may have an Abbe number greater than 50, and the second lens may have an Abbe number less than or equal to 30.

In order to solve the above or other problems, according to an embodiment, an electronic device may include a lens assembly including a plurality of lenses arranged from an object side to an image side where there is an image plane, at least one camera module that obtains information about an object from light incident through the lens assembly, and an image signal processor that processes an image of the object based on the information, wherein the lens assembly may include a reflective member that bends a first optical axis of light incident from the object side into a second optical axis, a first lens group arranged on the second optical axis so that the light bent by the reflective member is incident thereon and having a positive refractive power, a second lens group arranged on an image side of the first lens group and having a positive refractive power, and a third lens group arranged on an image side of the second lens group and having a negative refractive power, the first lens group and the third lens group may move toward the object side to perform zooming from a wide angle end to a telephoto end, the first lens group may include a first lens arranged closest to the object side and a second lens arranged on an image side of the first lens, the first lens may have an Abbe number greater than 50, and the second lens may have an Abbe number less than or equal to 30.

Advantageous Effects

Various embodiments provide a small lens assembly capable of obtaining middle images up to a wide angle end, a middle end, and a telephoto end without deteriorating image quality. Lens assemblies according to various embodiments are, for example, small in size and may perform focusing. The lens assemblies according to various embodiments may facilitate aberration correction by appropriately distributing refractive powers of lenses. In addition, electronic devices each including the lens assembly, according to various embodiments, are, for example, small in size and may capture multimedia (e.g., photos or videos) with high performance. In addition, the lens assemblies according to various embodiments may include a reflective member, and image stabilization may be performed by the reflective member. In addition to, various effects identified directly or indirectly through the present disclosure may be provided.

Description of Drawings

FIG. 1 illustrates a lens assembly of a first numerical example at a wide angle end, according to various embodiments.
FIG. 2 illustrates the lens assembly of the first numerical example at a telephoto end, according to various embodiments.
FIG. 3 illustrates an example of image stabilization in a lens assembly according to various embodiments.
FIG. 4 illustrates another example of image stabilization in a lens assembly according to various embodiments.
FIG. 5 illustrates an image circle of a lens assembly according to various embodiments.
FIG. 6 is a diagram for describing a clear aperture and a short-side clear aperture of a lens assembly according to various embodiments.
FIG. 7 illustrates an aberration diagram at the wide angle end of the lens assembly according to the first numerical example, according to various embodiments.
FIG. 8 illustrates an aberration diagram at the telephoto end of the lens assembly according to the first numerical example, according to various embodiments.
FIG. 9 illustrates a lens assembly of a second numerical example at a wide angle end, according to various embodiments.
FIG. 10 illustrates a lens assembly of a second numerical example at a telephoto end, according to various embodiments.
FIG. 11 illustrates an aberration diagram at the wide angle end of the lens assembly according to the second numerical example, according to various embodiments.
FIG. 12 illustrates an aberration diagram at the telephoto end of the lens assembly according to the second numerical example, according to various embodiments.
FIG. 13 illustrates a lens assembly of a third numerical example at a wide angle end, according to various embodiments.
FIG. 14 illustrates a lens assembly of a third numerical example at a telephoto end, according to various embodiments.
FIG. 15 illustrates an aberration diagram at the wide angle end of the lens assembly according to the third numerical example, according to various embodiments.
FIG. 16 illustrates an aberration diagram at the telephoto end of the lens assembly according to the third numerical example, according to various embodiments.
FIG. 17 illustrates a lens assembly of a fourth numerical example at a wide angle end, according to various embodiments.

FIG. 18 illustrates a lens assembly of a fourth numerical example at a telephoto end, according to various embodiments.

FIG. 19 illustrates an aberration diagram at the wide angle end of the lens assembly according to the fourth numerical example, according to various embodiments.

FIG. 20 illustrates an aberration diagram at the telephoto end of the lens assembly according to the fourth numerical example, according to various embodiments.

FIG. 21 illustrates a front side of a mobile device including a lens assembly, according to various embodiments.

FIG. 22 illustrates a rear side of the mobile device including the lens assembly, according to various embodiments.

FIG. 23 is a block diagram of an electronic device in a network environment, according to various embodiments.

FIG. 24 is a block diagram of a camera module in an electronic device, according to various embodiments.

FIG. 25 is a high-level flowchart of a method of performing image capturing by using a lens assembly in an electronic device, according to various embodiments.

## Mode for Invention

Hereinafter, various embodiments of the present disclosure will be described with reference to the accompanying drawings. However, this is not intended to limit the technology described in the present disclosure to specific embodiments and should be understood to include various modifications, equivalents, and/or alternatives of the embodiments of the present disclosure. In connection with the description of the drawings, like reference numbers may be used to denote like elements.

Electronic devices according to various embodiments disclosed in the present disclosure may be various types of devices. The electronic devices may include, for example, portable communication devices (e.g., a smartphone), computer devices, portable multimedia devices, portable medical devices, cameras, wearable devices, or home appliances. The electronic device according to an embodiment of the present disclosure is not limited to the devices described above.

Various embodiments of the present disclosure and terms as used therein are not intended to limit the technical features described in the present disclosure to specific embodiments and should be understood as including various modifications, equivalents, or alternatives of the embodiments. In connection with the description of the drawings, like reference numbers may be used to denote like or related elements. A singular form of a noun corresponding to an item may include one or more items, unless the relevant context clearly indicates otherwise. In the present disclosure, the expressions "A or B," "at least one of A and B," "at least one of A or B," "A, B, or C," "at least one of A, B, and C," and "at least one of A, B, or C" may include any one of the items listed in the corresponding expression or all possible combinations thereof. The terms "first," "second," etc. as used herein may be only used to distinguish one element from another and do not limit the elements in any other aspects (e.g., importance or order). When a certain (e.g., first) element is referred to as being "coupled" or "connected" to another (e.g., second) element with or without the terms "functionally" or "communicatively," it means that the certain element may be coupled or connected to the other element directly (e.g., by wire) or wirelessly or through a third element.

The term "module" as used in various embodiments of the present disclosure may include a unit implemented in hardware, software, or firmware and may be used interchangeably with, for example, "logics," "logic blocks," "components," or "circuits." The module may be an integrally constructed component or a minimal unit of the component or a portion thereof that performs one or more functions. For example, according to an embodiment, the module may be implemented in the form of an application-specific integrated circuit (ASIC).

Various embodiments of the present disclosure may be implemented as software (e.g., a program 440) including one or more instructions stored in a storage medium (e.g., an internal memory 436 or an external memory 438) readable by a machine (e.g., an electronic device 401). For example, a processor (e.g., a processor 420) of a machine (e.g., an electronic device 401) may call at least one command among the stored one or more instructions from the storage medium and execute the called at least one command. This enables the machine to operate to execute at least one function according to the called at least one instruction. The one or more instructions may include code generated by a compiler or code executable by an interpreter. The storage medium that is readable by the machine may be provided in the form of a non-transitory storage medium. The non-transitory storage medium is a tangible device and only means not including a signal (e.g., electromagnetic waves). This term does not distinguish between a case where data is semi-permanently stored in a storage medium and a case where data is temporarily stored in a storage medium.

According to an embodiment, the methods according to various embodiments disclosed in the present disclosure may be provided by being included in a computer program product. The computer program products may be traded between a seller and a buyer as commodities. The computer program product may be distributed in the form of a machine-readable storage medium (e.g., compact disc read only memory (CD-ROM)), or may be distributed (e.g., downloaded or uploaded) online, either via an application store (e.g., Play Store™) or directly between two user devices (e.g., smartphones). In the case of the online distribution, at least part of the computer program product may be stored at least temporarily on a machine-readable storage medium, such as a server of a manufacturer, a server of an application store, or a memory of a relay server, or may be temporarily generated.

According to various embodiments, the respective elements (e.g., the modules or the programs) described above may include one or more entities, and some entities may be separately arranged in other elements. According to various embodiments, one or more operations or elements among the above-described elements may be omitted, or one or more other operations or elements may be added. Alternatively or additionally, a plurality of elements (e.g., the modules or the programs) may be integrated into a single element. In this case, the integrated element may execute one or more functions of each of the elements identically or similarly to those executed by the corresponding element among the elements prior to the integration. According to various embodiments, operations performed by modules, programs, or other elements may be performed sequentially, in parallel, iteratively, or heuristically, one or more of the operations may be performed in a different order or may be omitted, or one or more other operations may be added. In the present disclosure, the term "user" may refer to a person using an electronic device or a device (e.g., an artificial intelligence electronic device) using an electronic device.

Hereinafter, a lens assembly and a device including the same, according to various embodiments, will be described in detail with reference to the accompanying drawings.

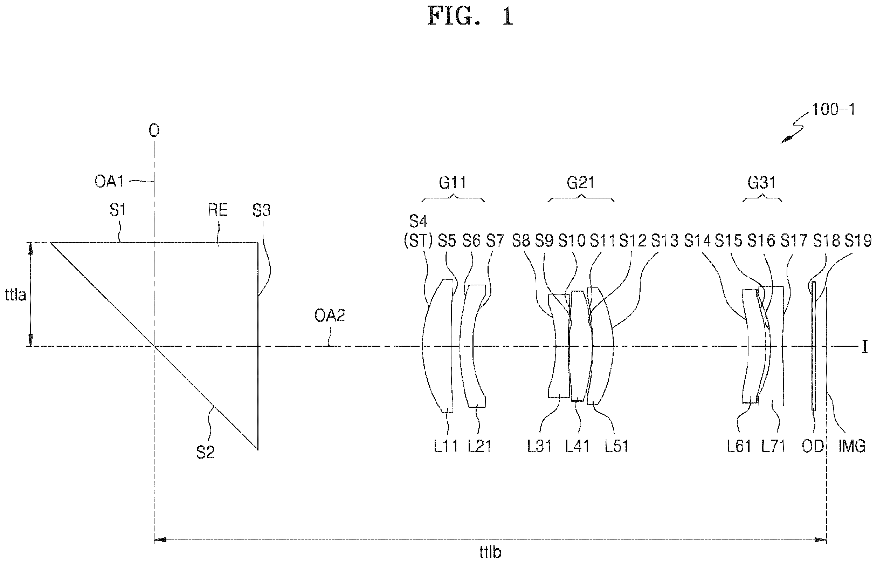

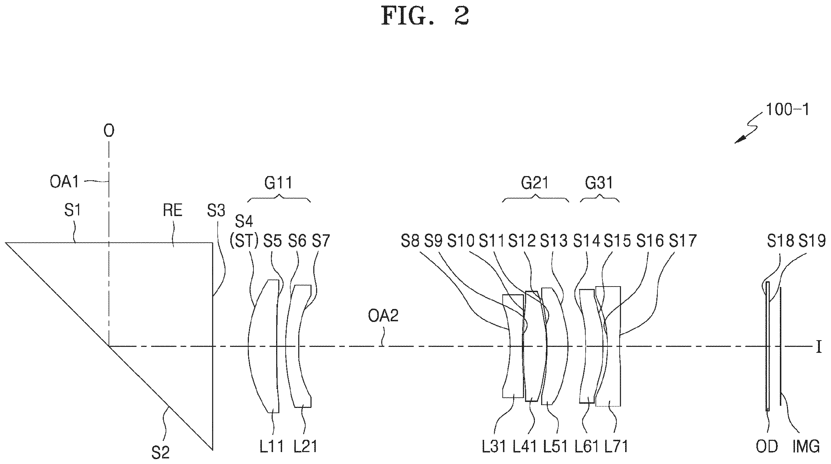

FIG. 1 illustrates a lens assembly 100-1 of a first numerical example at a wide angle end, according to various embodiments, and FIG. 2 illustrates the lens assembly 100-1 at a telephoto end.

The lens assembly 100-1 according to various embodiments includes a plurality of lenses arranged from an object side O to an image side I where there is an image plane.

In describing the configuration of each lens below, the image side may indicate, for example, a direction in which an image plane IMG in which an image is formed is located, and the object side may indicate a direction in which an object is located. In addition, an "object side surface" of the lens may be, for example, a lens surface on a side where the object is located with respect to an optical axis OA2 and may refer to a surface on which light is incident with respect to the optical axis OA2. An "image side surface" may be a lens surface on a side where the image plane IMG is located with respect to the optical axis OA2 and may indicate a surface from which light is emitted with respect to the optical axis OA2. The image plane IMG may be, for example, an imaging device surface or an image sensor surface. An image sensor may include, for example, a sensor such as a complementary metal oxide semiconductor (CMOS) image sensor or a charge coupled device (CCD). The image sensor is not limited thereto and may be, for example, a device that converts an image of an object into an electrical image signal. Member numbers S1, S2, S3, S4, and Sn (where n is a natural number) are sequentially assigned from the object side O to the image side I along the optical axes OA1 and OA2 with respect to the object side surface and the image side surface of a reflective member RE, each lens, and an optical device OD. According to various embodiments, a microlens layer (not shown) may be further formed on the image sensor. A structure in which a plurality of lenses or filters are formed is not limited to that described above, and additional lenses or filters may be further formed, and at least one of the plurality of lenses may be omitted.

The lens assembly 100-1 according to various embodiments includes a reflective member RE that bends a first optical axis OA1 of light incident from the object side O to a second optical axis OA2, a first lens group G11 arranged on the second optical axis OA2, so that the light bent by the reflective member RE is incident thereon, and having a positive refractive power, a second lens group G21 provided on the image side I of the first lens group G11 and having a positive refractive power, and a third lens group G31 provided on the image side I of the second lens group G21 and having a negative refractive power. When parallel light is incident on a lens having a positive refractive power, the light passing through the lens may be concentrated. For example, the lens having the positive refractive power may be a lens based on a principle of a convex lens. On the other hand, when parallel light is incident on a lens having a negative refractive power, the light passing through the lens may spread out. For example, the lens having the negative refractive power may be a lens based on a principle of a concave lens. When the reflective member RE is provided as illustrated in FIG. 1, the object side O is based on when the bent optical axes OA1 and OA2 are straightened out. The reflective member RE may include, for example, a prism or a reflective mirror. The lens assembly 100-1 according to various embodiments does not include any lens on the object side O of the reflective member RE. When a lens is provided in front of the reflective member RE, it is difficult to miniaturize the lens assembly 100-1. The reflective member R2 may include an incident surface S1 on which light is incident, a reflective surface S2 from which light is reflected, and an exit surface S3 from which light is emitted. The reflective member RE may include glass or plastic.

When the lens assembly 100-1 zooms from the wide angle end to the telephoto end, the first lens group G11 and the third lens group G31 may be moved and the second lens group G21 may be fixed. The first lens group G11 and the third lens group G31 may perform focusing for image plane matching according to a change in the object distance of the object.

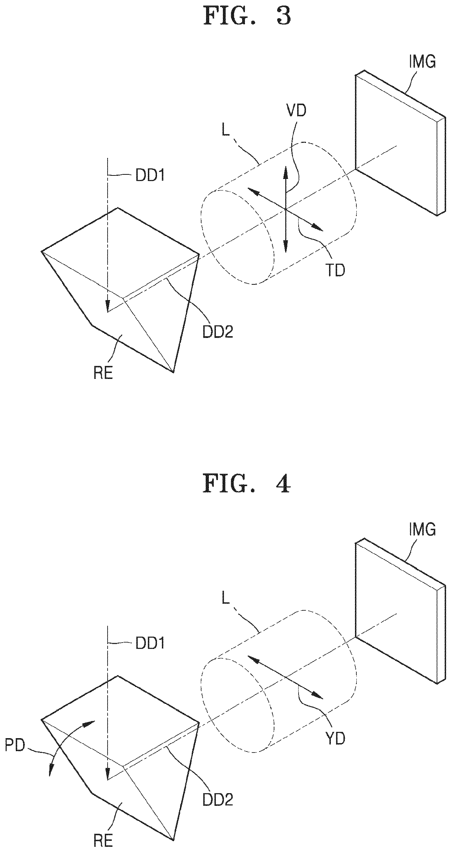

According to various embodiments, a camera shake error caused during image capturing may be corrected. FIGS. 3 and 4 are schematic conceptual diagrams for describing image stabilization. As illustrated in FIG. 3, image stabilization may be performed by moving at least one lens group L in a direction VD substantially perpendicular to a second direction DD2 or in a direction TD substantially horizontal to the second direction DD2. The at least one lens group L may include a first lens group G11, a second lens group G21, and a third lens group G31. A first direction DD1 may be a direction of the first optical axis OA1 of FIG. 1, and the second direction DD2 may be a direction of the second optical axis OA2 of FIG. 1.

Alternatively, as illustrated in FIG. 4, the reflective member RE may be tilted to perform image stabilization (or camera shake correction) in a pitch direction PD, and the first lens group G11, the second lens group G21, and the third lens group G31 move substantially horizontally in the second direction DD2 to perform image stabilization in a yaw direction YD. In FIG. 4, the first lens group G11, the second lens group G21, and the third lens group G31 are denoted by L for convenience.

The first lens group G11 may include a first lens L11 arranged closest to the object side O, and a second lens L21 arranged on the image side I of the first lens L11. For example, the first lens L11 may have a positive refractive power and the second lens L21 may have a negative refractive power. The first lens L11 may include an object side surface S4 that is convex toward the object side O. The first lens L11 may be a meniscus lens. The second lens L21 may be a meniscus lens that is convex toward the object side O.

The first lens L11 may have an Abbe number greater than 50, and the second lens L21 may have an Abbe number less than or equal to 30. The Abbe numbers of the first lens L11 and the second lens L21 are defined as Abbe numbers of a wavelength of 546.0740 nanometers (NM). The above condition is for correcting a longitudinal chromatic aberration. The longitudinal chromatic aberration may be corrected satisfactorily within a range satisfying the above condition.

The first lens group G11 may include a stop ST for determining Fno. According to various embodiments, the stop ST is a virtual plane formed or defined by a structure including an aperture and a blocking portion (not shown), and may be a virtual plane including an aperture through which light is incident. For example, the blocking portion (not shown) may adjust the size of the aperture (e.g., the physical amount of light entering the lens), and the stop ST may refer to a virtual plane including the aperture. The stop ST may be provided on, for example, the object side surface S4 of the first lens L11 and may contribute to miniaturizing the lens assembly 100-1. The stop ST is for adjusting the diameter of the luminous flux and may include, for example, an aperture stop, a variable stop, or a mask-shaped stop. According to various embodiments, the stop ST is illustrated as being arranged adjacent to the object side surface S4 of the first lens L11, but the present disclosure is not limited thereto, and the stop ST may be arranged on the image side surface S5 of the first lens L11. For example, the amount of light reaching the image plane IMG of the image sensor may be adjusted by adjusting the size of the stop ST.

The second lens group G21 may include a third lens L31 having a negative refractive power, a fourth lens L41 having a positive or negative refractive power, and a fifth lens L51 having a positive refractive power. For example, the third lens L31 may be a bi-concave lens, the fourth lens L41 may be a bi-convex lens, and the fifth lens L51 may be a meniscus lens that is concave toward the object side O.

The third lens group G31 may include a sixth lens L61 having a positive refractive power and a seventh lens L71 having a negative refractive power. The sixth lens L61 may be a meniscus lens that is concave toward the object side O, and the seventh lens L71 may be a bi-concave lens. The seventh lens L71 may be arranged closest to the image side I of the lens assembly 100-1.

According to various embodiments, at least one optical device OD may be provided between the seventh lens L71 and the image plane IMG. The optical device OD may include, for example, at least one of a low pass filter, an infrared (IR)-cut filter, or a cover glass. For example, when the optical device OD (e.g., an IR-cut filter) is included, a color of an image detected and captured through an image sensor may be approximated to a color that a person feels when viewing a real object. For example, when the IR-cut filter is provided as the optical device, visible light is transmitted and IR light is emitted to the outside, so that the IR light is not transmitted to the image plane. However, the lens assembly may be configured without the optical device.

The lens assembly according to various embodiments may satisfy the following formulae. The following formulae will be described with reference to the lens assembly 100-1 illustrated in FIG. 1 according to the first numerical embodiment. However, the same may be applied to other embodiments.

$$0.5 < EFL1G / EFLW < 3.09 \quad \text{<Formula 1>}$$

$$0.1 < EFL2G / EFLT < 1.0 \quad \text{<Formula 2>}$$

EFL1G represents the focal length of the first lens group, EFLW represents the focal length of the lens assembly at the wide angle end, EFL2G represents the focal length of the second lens group, and EFLT represents the focal length of the lens assembly at the telephoto end.

When (EFL1G / EFLW) is less than the lower limit of Formula 1, the focal length of the first lens group is too small, and thus, the sensitivity of the first lens group is increased. When (EFL1G / EFLW) is greater than the upper limit of Formula 1, the power of the first lens group is weakened, and thus, it is difficult to correct the optical aberration and a long optical path length makes it difficult to miniaturize the lens assembly.

When (EFL2G / EFLT) is less than the lower limit of Formula 2, the focal length of the second lens group is too small, and thus, the sensitivity of the second lens group is increased. When (EFL2G / EFLT) is greater than the upper limit of Formula 2, the power of the second lens group is weakened, and thus, it is difficult to correct the optical aberration and a long optical path length makes it difficult to miniaturize the lens assembly.

The lens assembly according to various embodiments may satisfy the following formulae.

$$\mathrm{Ld / D < 1} \qquad \text{<Formula 3>}$$

Ld represents a size of a maximum clear aperture (e.g., max clear aperture) at the wide angle end of the last lens (e.g., the seventh lens L71) arranged closest to the image side I of the lens assembly, and D represents an image circle size. For example, in the lens, the "clear aperture" may be defined as a region through which most external light is substantially transmitted or through which pieces of light, which may be the center in obtaining an image, pass. In addition, in order to block the incidence of light reflected from the lens assembly, a light blocking member (not shown) may be formed around the first lens L11 to correspond to the size of the clear aperture through which most of light passes.

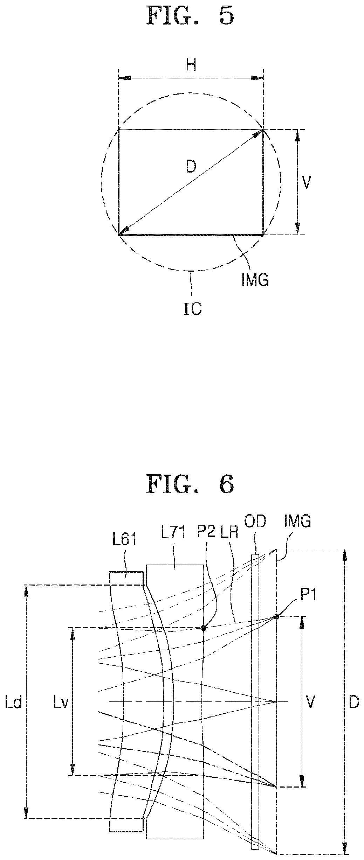

FIG. 5 illustrates an image sensor IMG and an image circle IC of the lens assembly 100-1. In the present specification, the same reference numerals are used for the image sensor and the image plane. The image circle IC may represent a circle, a diameter of which is the same as a diagonal length of the image sensor IMG. D represents the size of the image circle IC, which represents the diameter of the image circle IC or the diagonal length of the image sensor IMG. In general, an image height represents half of the diagonal length of the image sensor IMG. V represents the length of the short side of the image sensor IMG, and H represents the length of the long side of the image sensor IMG. Formula 1 defines that the maximum clear aperture at the wide angle end of the last lens L71 arranged closest to the image side I of the lens assembly is smaller than the image circle size D. When Formula 1 is satisfied, the lens assembly may be miniaturized.

FIG. 6 is a partial enlarged view of the lens assembly 100-1 and illustrates the seventh lens L71 arranged closest to the image side I, the optical device OD, and the image sensor IMG. Ld represents the maximum clear aperture at the wide angle end of the seventh lens L71 arranged closest to the image side, and Lv represents the clear aperture at a point P2 where light ray LR reaching an end point P1 of the short side of the image sensor IMG at the wide angle end passes through the seventh lens L71. Lv is referred to as a short side clear aperture. Formula 1 represents a ratio of the maximum clear aperture Ld at the wide angle end of the seventh lens L71 to the diameter D of the image circle IC. When Formula 1 is satisfied, the size of the seventh lens L71 is smaller than the size of an image sensor assembly, and thus, the size of the lens assembly may be reduced.

According to various embodiments, referring to FIG. 1, a total track length (TTL) of the lens assembly 100-1 may be less than or equal to about 35 mm. The total track length (TTL) of the lens assembly 100-1 may be the sum of a distance ttla from the incident surface S1 of the reflective member RE to the reflective surface S2 of the reflective member RE and a distance ttlb from the reflective surface S2 of the reflective member RE through the exit surface S3 to the image plane IMG. The lens assembly may be miniaturized by setting the total track length (TTL) to 35 mm or less. When the lens assembly 100-1 is adopted to an electronic device, the degree of freedom of arrangement of the lens assembly 100-1 may be increased by the reflective member RE. Therefore, the lens assembly may be easily incorporated into a small electronic device. According to various embodiments, when the optical device OD (e.g., an IR-cut filter, a cover glass, etc.) is provided on the optical axes OA1 and OA2, an air converted value may be applied as the total track length (TTL). For example, when n and d are respectively the refractive index and the thickness of the optical device OD, a value of $(1-(1/n))*d$ may be applied when calculating the total track length (TTL).

According to various embodiments, light incident from the object side O is bent by 90 degrees by using the reflective member RE so that the thickness of the lens assembly 100-1 corresponds to the thickness of the mobile device. Accordingly, the lens assembly 100-1 may be easily installed in a small and thin mobile device. In addition, according to various embodiments, the refractive powers of the lens groups included in the lens assembly are sequentially arranged to be positive, positive, and negative, so that the maximum clear aperture of the last lens (e.g., the seventh lens L71) is made to be less than the image height of the image or the size of the image circle IC. Optical aberration may be efficiently reduced by appropriately distributing the Abbe numbers of the lenses. Accordingly, the lens assembly may be miniaturized while achieving high resolution For example, the Abbe number represents a quantity that defines the property of light dispersion of a lens. The Abbe number may be formed differently depending on the refractive index and may refer to the reciprocal of dispersion. In an embodiment, a sharp image may be obtained by distributing the Abbe numbers of the lenses. For example, as the Abbe number increases, a clearer image may be obtained. As the refractive index increases, the Abbe number decreases. As the refractive index increases, the dispersion increases. Accordingly, a clear image may be obtained.

The lens assembly according to various embodiments may be mounted on a mobile device, such as a mobile phone, a smartphone, or a digital camera. In addition, the lens assembly according to various embodiments may be applied to tablet computing devices, laptops, netbook, notebook, sub-notebook and ultrabook computers, surveillance cameras, automotive cameras, augmented reality (AR) glasses, virtual reality (VR) glasses, action cams, and the like. In addition, in order to obtain a zoom image with a higher magnification, a dual camera or a multi-camera may be configured together with, for example, a wide-angle lens camera or one or more other camera modules.

According to various embodiments, the first lens group G11 and the third lens group G31 move in the direction of the object side O when zooming from the wide angle end to the telephoto end in order to obtain an optical zoom magnification. In addition, the third lens group G31 includes a sixth lens L61 and a seventh lens L71, which are sequentially arranged from the object side O. The sixth lens L61 has a positive refractive power and the seventh lens L71 is concave toward the object side O and has a negative refractive power. The maximum clear aperture of the seventh lens L71 is less than the diameter D of the image circle IC. Accordingly, the lens assembly may be miniaturized.

In addition, according to various embodiments, the second lens group G21 includes a negative lens, a positive lens, and a positive lens, which are sequentially arranged from the object side O to the image side I, or may include a negative lens, a negative lens, and a positive lens, which are sequentially arranged from the object side O to the image side I. The third lens group G31 includes a positive lens and a negative lens, which are sequentially arranged from the object side O. Accordingly, chromatic aberration in the range from the wide angle end to the telephoto end may be reduced, and astigmatism and curvature of image field occurring during zooming may be effectively reduced.

According to various embodiments, the first to seventh lenses L11, L21, L31, L41, L51, L61, and L71 included in the lens assembly may be formed of plastic. In addition, the lens assembly according to various embodiments may include at least one aspherical lens. For example, the first to seventh lenses L11, L21, L31, L41, L51, L61, and L71 may each be a double-sided aspherical lens.

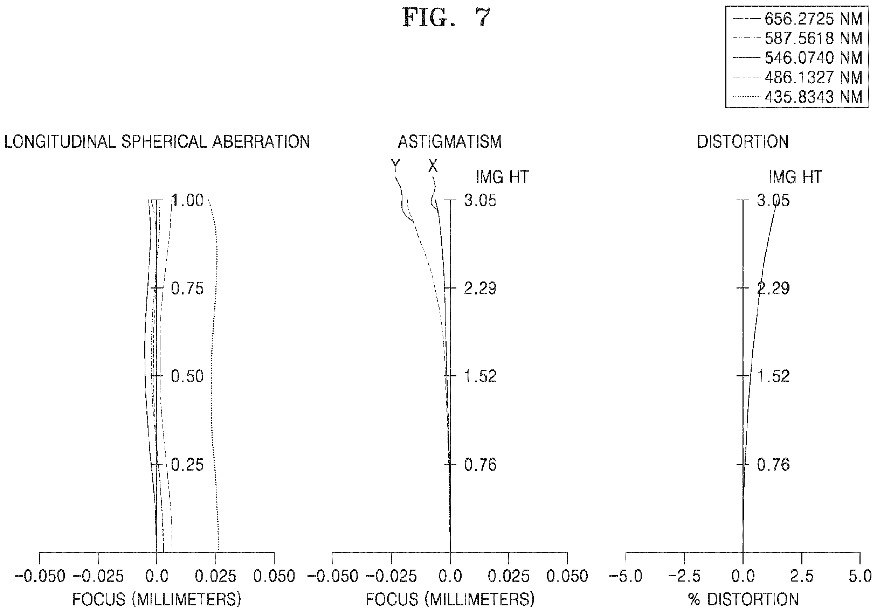

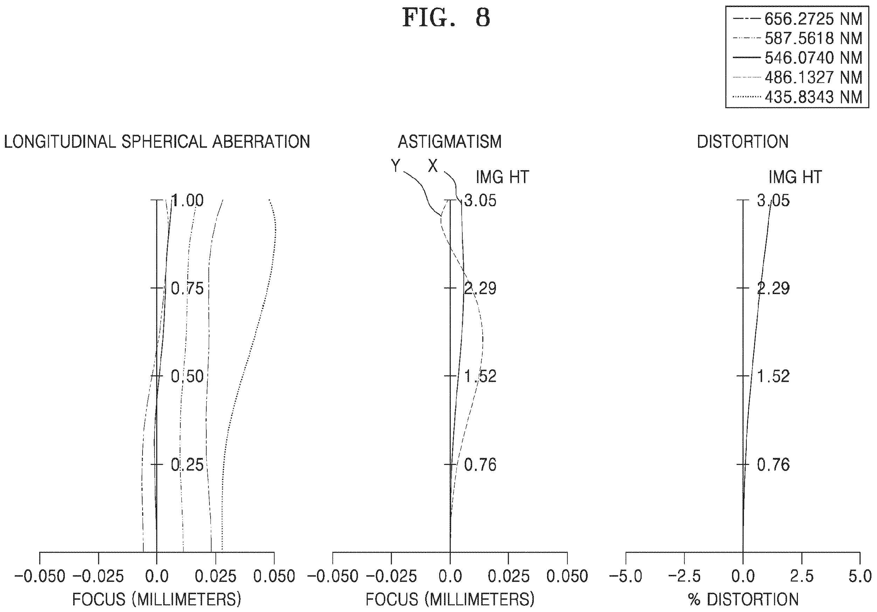

FIG. 7 illustrates longitudinal spherical aberration, astigmatism (e.g., curvature of image field), and distortion at the wide angle end of the lens assembly 100-1 according to the first numerical example. FIG. 8 illustrates longitudinal spherical aberration, astigmatism (e.g., curvature of image field), and distortion at the telephoto end of the lens assembly 100-1 according to the first numerical example. In an embodiment, the horizontal axis of the longitudinal spherical aberration represents a coefficient, and the vertical axis of the longitudinal spherical aberration represents a normalized distance from the center of the optical axis, and a change in the longitudinal spherical aberration according to the wavelength of light is illustrated. For example, the longitudinal spherical aberration is shown for pieces of light respectively having a wavelength of 656.2725 NM (e.g., red), 587.5618 NM (e.g., yellow), 546.0740 NM, 486.1327 NM (e.g., blue), and 435.8343 NM, and tangential (or meridional) field curvature (Y) and sagittal field curvature (X) are shown as the curvature of image field. The curvature of image field is shown for light having a wavelength of 546.0740 NM, and distortion is shown for light having a wavelength of 546.0740 NM. In various embodiments, referring to the distortion, although the image captured through the lens assembly 100-1 is distorted at a point out of the optical axes OA1 and OA2, this distortion is of a degree that may generally occur in an optical device using a lens. Because a distortion rate is less than about 2 %, good optical properties may be provided.

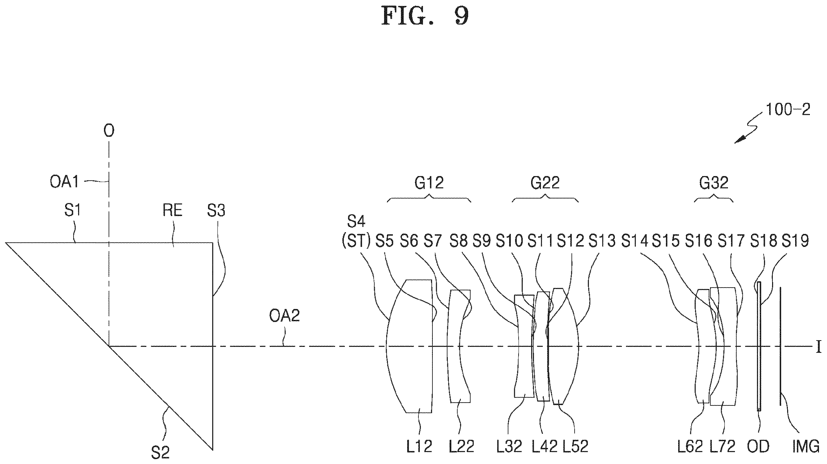

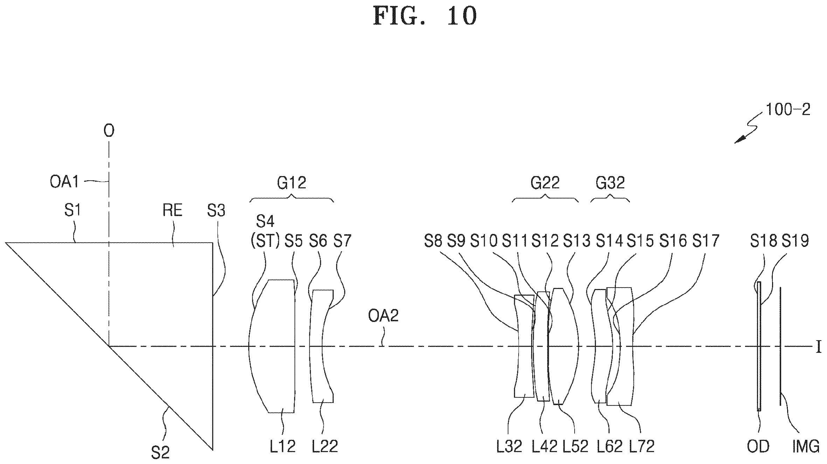

FIG. 9 illustrates a lens assembly 100-2 of a second numerical example at a wide angle end, according to various embodiments, and FIG. 10 illustrates the lens assembly 100-2 at a telephoto end. The lens assembly 100-2 includes a first lens group G12 having a positive refractive power, a second lens group G22 having a positive refractive power, and a third lens group G32 having a negative refractive power, which are arranged from an object side O to an image side I. The first lens group G12 includes a first lens L12 having a positive refractive power and a second lens L22 having a negative refractive power. The second lens group G22 may include a third lens L32 having a negative refractive power, a fourth lens L42 having a positive refractive power, and a fifth lens L52 having a positive refractive power. The third lens group G32 may include a sixth lens L62 having a positive refractive power and a seventh lens L72 having a negative refractive power. Because each lens of the lens assembly 100-2 of the second numerical example is substantially the same as each lens of the lens assembly 100-1 of the first numerical example, a detailed description thereof is omitted.

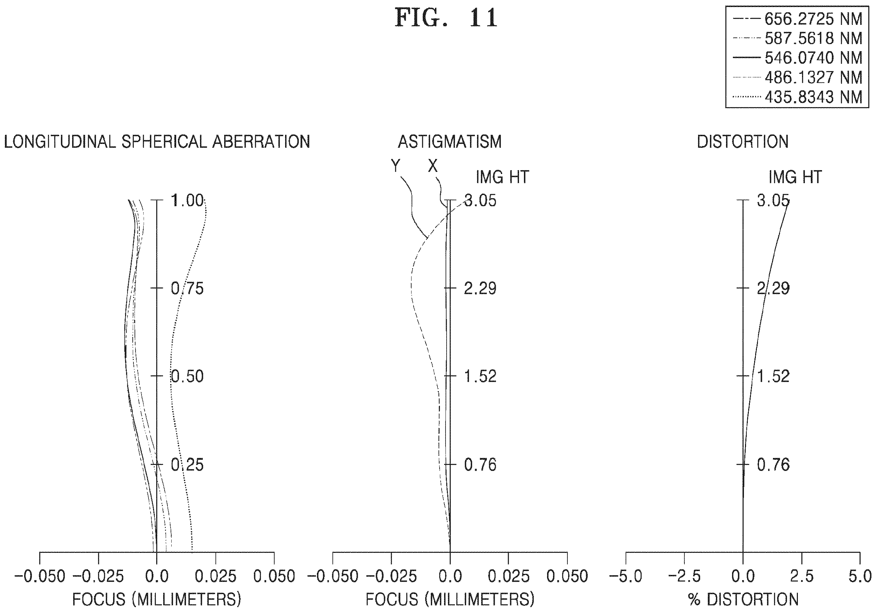

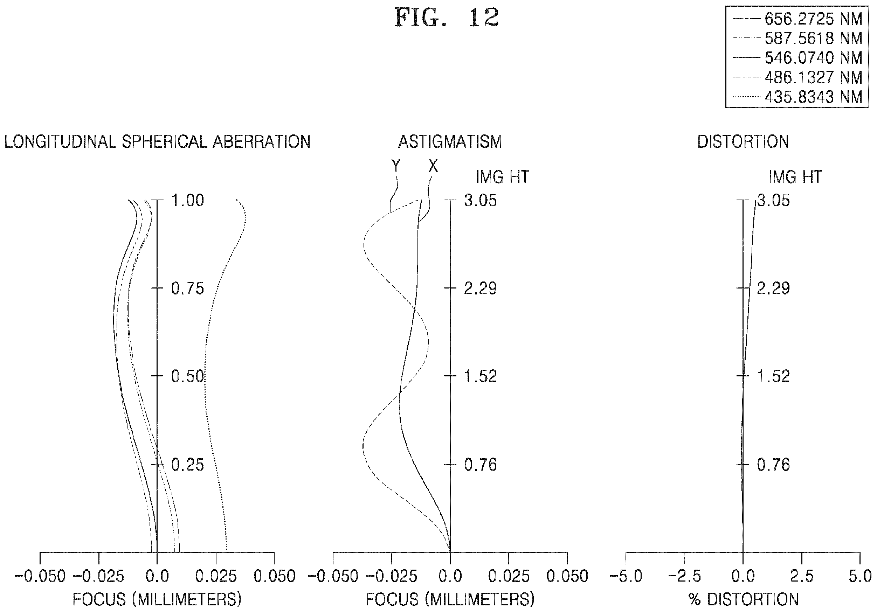

FIG. 11 illustrates longitudinal spherical aberration, astigmatism, and distortion at the wide angle end of the lens assembly 100-2 according to the second numerical example. FIG. 12 illustrates longitudinal spherical aberration, astigmatism, and distortion at the telephoto end of the lens assembly 100-2 according to the second numerical example.

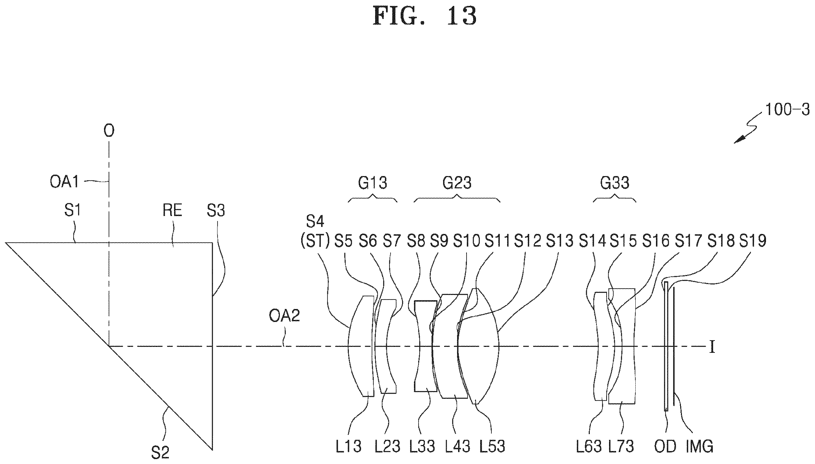

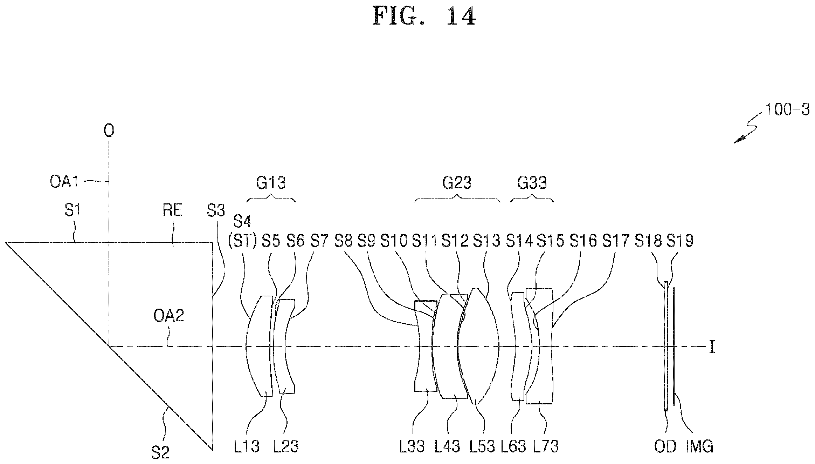

FIG. 13 illustrates a lens assembly 100-3 of a third numerical example at a wide angle end, according to various embodiments, and FIG. 14 illustrates the lens assembly 100-3 at a telephoto end. The lens assembly 100-3 includes a first lens group G13 having a positive refractive power, a second lens group G23 having a positive refractive power, and a third lens group G33 having a negative refractive power, which are arranged from an object side O to an image side I. The first lens group G13 includes a first lens L13 having a positive refractive power and a second lens L23 having a negative refractive power. The second lens group G23 may include a third lens L33 having a negative refractive power, a fourth lens L43 having a negative refractive power, and a fifth lens L53 having a positive refractive power. The third lens group G33 may include a sixth lens L63 having a positive refractive power and a seventh lens L73 having a negative refractive power. Because each lens of the lens assembly 100-3 of the third numerical example is substantially the same as each lens of the lens assembly 100-1 of the first numerical example, a detailed description thereof is omitted.

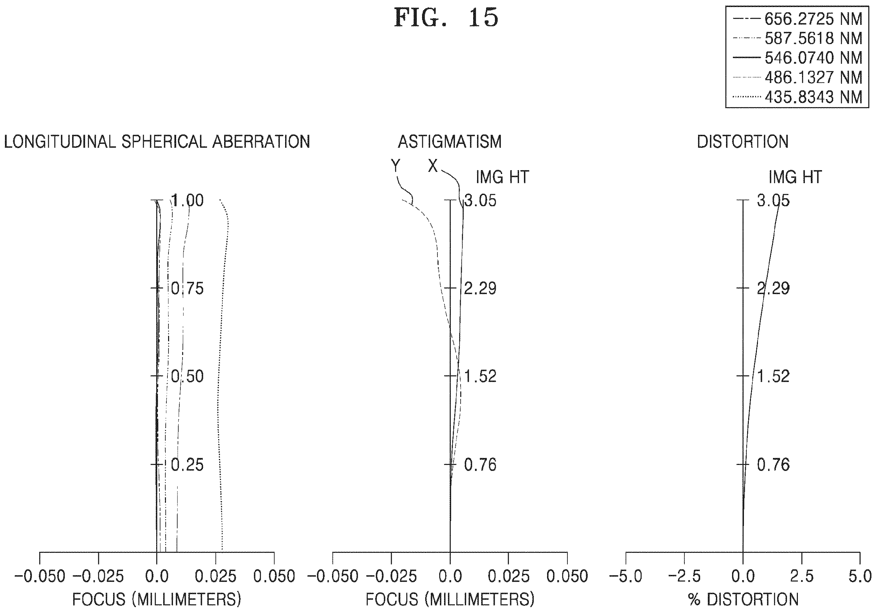

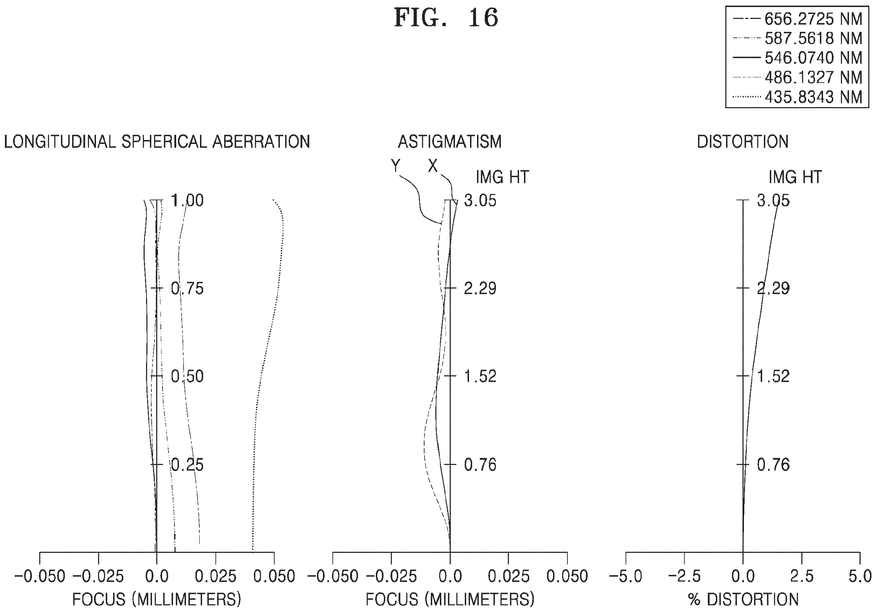

FIG. 15 illustrates longitudinal spherical aberration, astigmatism, and distortion at the wide angle end of the lens assembly 100-3 according to the third numerical example. FIG. 16 illustrates longitudinal spherical aberration, astigmatism, and distortion at the telephoto end of the lens assembly 100-3 according to the third numerical example.

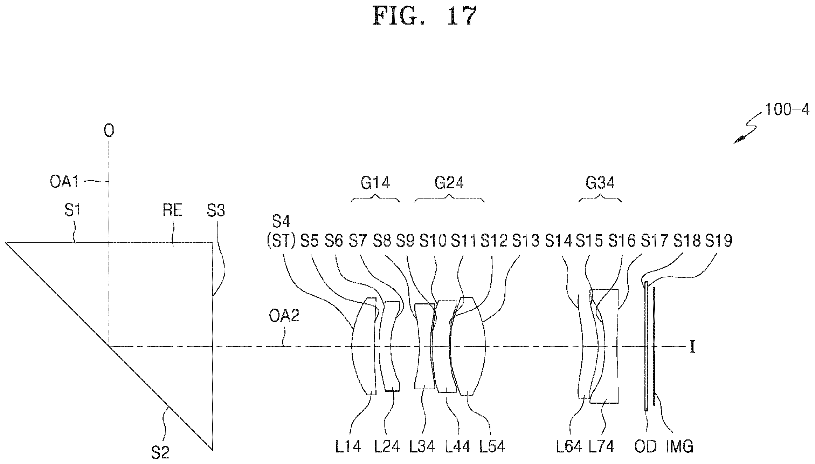

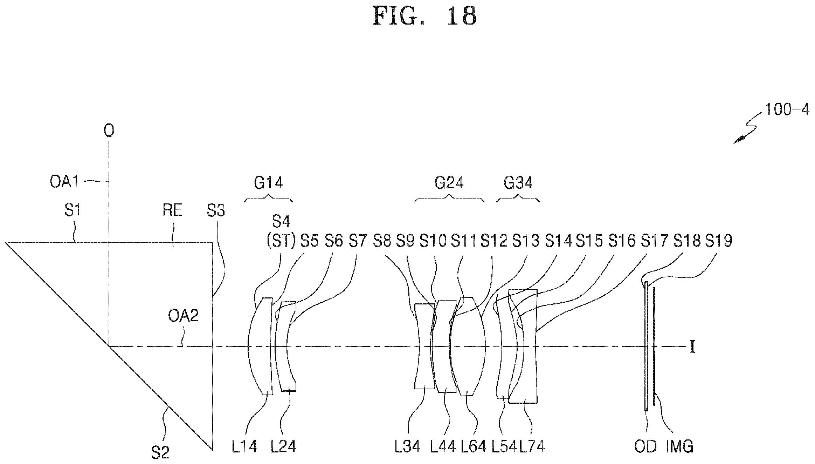

FIG. 17 illustrates a lens assembly 100-4 of a fourth numerical example at a wide angle end, according to various embodiments, and FIG. 18 illustrates the lens assembly 100-4 at a telephoto end. The lens assembly 100-4 includes a first lens group G14 having a positive refractive power, a second lens group G24 having a positive refractive power, and a third lens group G34 having a negative refractive power, which are arranged from an object side O to an image side I. The first lens group G14 includes a first lens L14 having a positive refractive power and a second lens L24 having a negative refractive power. The second lens group G24 may include a third lens L34 having a negative refractive power, a fourth lens L44 having a negative refractive power, and a fifth lens L54 having a positive refractive power. The third lens group G34 may include a sixth lens L64 having a positive refractive power and a seventh lens L74 having a negative refractive power. Because each lens of the lens assembly 100-4 of the fourth numerical example is substantially the same as each lens of the lens assembly 100-1 of the first numerical example, a detailed description thereof is omitted.

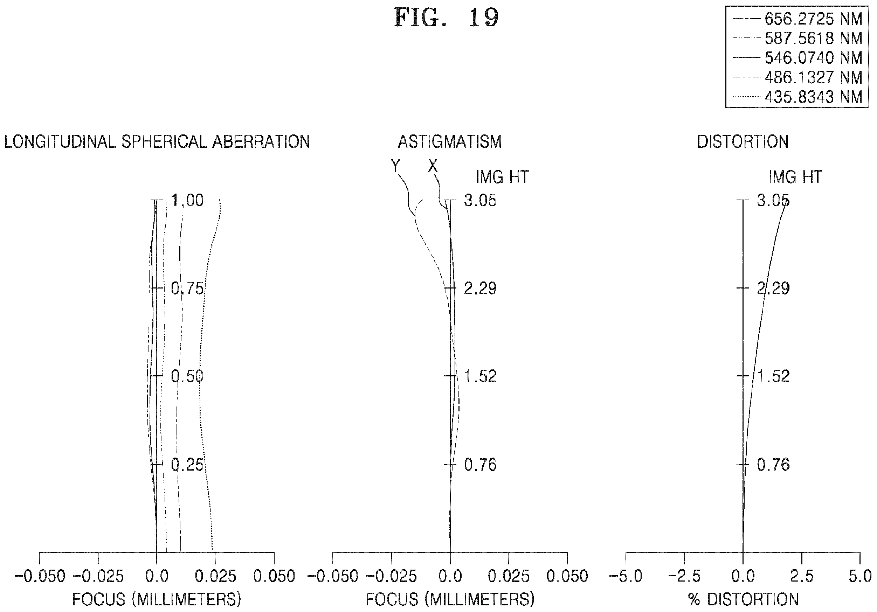

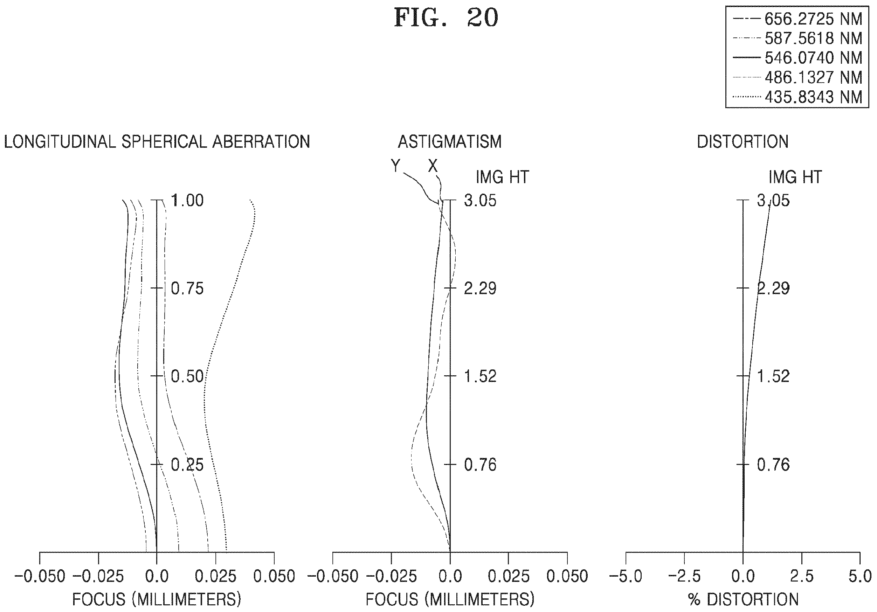

FIG. 19 illustrates longitudinal spherical aberration, astigmatism, and distortion at the wide angle end of the lens assembly 100-4 according to the fourth numerical example. FIG. 20 illustrates longitudinal spherical aberration, astigmatism, and distortion at the telephoto end of the lens assembly 100-4 according to the fourth numerical example.

On the other hand, the definition of the aspherical surface used in the lens assembly according to various embodiments is as follows.

The aspherical surface shape may be expressed by the following formulae, when the x-axis is the direction of the optical axis, the y-axis is the direction perpendicular to the direction of the optical axis, and the traveling direction of the light ray is positive, x represents the distance from the apex of the lens in the direction of the optical axis, y represents the distance in the direction perpendicular to the optical axis, K represents the conic constant, A, B, C, D, ... are the aspherical coefficient, and c represents the reciprocal (1/R) of the radius of curvature (R) at the apex of the lens. The radius of curvature may represent, for example, a value indicating the degree of curvature at each point of a curved surface or a curved line.

$$x = \frac{cy^2}{1+\sqrt{1-(K+1)c^2y^2}} + Ay^4 + By^6 + Cy^8 + Dy^{10} + \dots$$

<Formula 4>

In the present disclosure, the lens assembly may be implemented through numerical examples according to various designs as follows.

In each numerical example, the surface numbers S1, S2, S3, ..., Sn (where n is a natural number) of the reflective member, the lens, and the optical device are sequentially assigned from the object side O to the image side I. EFL represents the total focal length of the lens assembly, FNO represents the F number, FOV is the half angle of view, R represents the radius of curvature, Dn represents the thickness of the lens or the distance between the lenses, nd represents the refractive index, and vd represents the Abbe number. ST represents the stop and obj represents the object. * represents the aspherical surface.

<First numerical example>

FIGS. 1 and 2 illustrate the lens assembly 100-1 of the first numerical example, according to various embodiments, and Table 1 shows, for example, design data of the first numerical example.

[Table 1]

| Lens surface | R | Dn | nd | vd |
|---|---|---|---|---|
| obj | infinity | D0 | | |
| S1 | infinity | 2.5 | 1.5168 | 64.2 |
| S2 | infinity | 2.5 | 1.5168 | 64.2 |
| S3 | infinity | D1 | | |
| S4(ST)* | 6.18 | 1.441 | 1.5348 | 55.71 |

(continued)

| Lens surface | R | Dn | nd | vd |
|---|---|---|---|---|
| S5* | 47.702 | 0.482 | | |
| S6* | 10.748 | 0.65 | 1.62598 | 25.12 |
| S7* | 5.919 | D2 | | |
| S8* | -7.627 | 0.65 | 1.5813 | 35.84 |
| S9* | 61.851 | 0.041 | | |
| S10* | 18.624 | 1.175 | 1.54397 | 55.93 |
| S11* | -10.004 | 0.041 | | |
| S12* | -11.327 | 1.05 | 1.54397 | 55.93 |
| S13* | -5.946 | D3 | | |
| S14* | -7.721 | 0.885 | 1.67074 | 19.3 |
| S15* | -5.633 | 0.228 | | |
| S16* | -6.926 | 0.65 | 1.54397 | 55.93 |
| S17* | 23.484 | D4 | | |
| S18 | infinity | 0.11 | 1.5168 | 64.2 |
| S19 | infinity | 0.612 | | |
| IMG | infinity | 0 | | |

Table 2 shows the aspherical surface coefficients in the first numerical example.

[Table 2]

| | K | A | B | C | D | E |
|---|---|---|---|---|---|---|
| S4 | 0.0403 | -3.63E-05 | -4.09E-06 | 3.28E-09 | -3.84E-08 | 4.60E-11 |
| S5 | 1.45053 | 3.65E-05 | -2.33E-06 | -5.30E-07 | 1.63E-08 | 1.24E-10 |
| S6 | -0.08015 | -1.71E-06 | 3.08E-06 | 5.91E-07 | 5.02E-08 | -6.41E-10 |
| S7 | 0.22452 | 1.63E-04 | 1.09E-05 | 1.77E-06 | 8.16E-08 | -3.01E-09 |
| S8 | 0.02955 | -8.73E-04 | -1.40E-05 | 5.66E-07 | 2.38E-07 | -1.93E-08 |
| S9 | 0.99643 | -5.22E-04 | -4.59E-05 | -7.31E-07 | 9.02E-07 | 3.01E-08 |
| S10 | -0.31471 | -8.84E-04 | -8.10E-05 | -2.34E-06 | 4.57E-07 | 6.52E-08 |
| S11 | -0.61876 | -2.51E-04 | -9.57E-06 | -1.18E-06 | -3.46E-07 | 5.26E-09 |
| S12 | 0.40049 | 3.74E-04 | 1.48E-05 | 4.80E-08 | 7.53E-08 | -4.65E-08 |
| S13 | -0.10312 | 3.36E-04 | -5.37E-07 | 3.82E-07 | -2.56E-08 | -1.24E-08 |
| S14 | -2.51758 | 1.41E-03 | 2.41E-04 | 2.88E-06 | -1.07E-06 | -1.05E-08 |
| S15 | -1.84088 | 1.00E-03 | 8.85E-05 | 2.10E-05 | 8.66E-07 | -2.34E-07 |
| S16 | 1.78123 | -2.98E-03 | 4.41E-05 | 2.78E-05 | 2.05E-06 | -2.59E-07 |
| S17 | -11.6393 | -3.64E-03 | 2.03E-04 | -1.47E-06 | 3.74E-07 | 1.90E-09 |

Table 3 shows the lens spacing, the angle of view, and the F number in the first numerical example.

[Table 3]

|  | Wide angle end | Telephoto end |
|---|---|---|
| D0 | infinity | infinity |
| D1 | 8.5002 | 1.8 |
| D2 | 4.27844 | 10.97897 |
| D3 | 6.97825 | 0.897 |
| D4 | 1.52771 | 7.60869 |
| FOV | 9.482 | 5.622 |
| FNO | 2.903 | 4.935 |

<Second numerical example>

FIGS. 9 and 10 illustrate the lens assembly 100-2 of the second numerical example, according to various embodiments, and Table 4 shows, for example, design data of the second numerical example.

[Table 4]

| Lens surface | R | Dn | nd | vd |
|---|---|---|---|---|
| obj | infinity | D0 |  |  |
| S1 | infinity | 2.5 | 1.5168 | 64.2 |
| S2 | infinity | 2.5 | 1.5168 | 64.2 |
| S3 | infinity | D1 |  |  |
| S4(ST)* | 5.91 | 2.406 | 1.5348 | 55.71 |
| S5* | -220.868 | 0.756 |  |  |
| S6* | 25.311 | 0.65 | 1.60764 | 28.66 |
| S7* | 5.917 | D2 |  |  |
| S8* | -14.35 | 0.65 | 1.59749 | 31.36 |
| S9* | 19.59 | 0.088 |  |  |
| S10* | 18.545 | 0.727 | 1.67075 | 19.24 |
| S11* | 22.584 | 0.038 |  |  |
| S12* | 22.317 | 1.568 | 1.5348 | 55.71 |
| S13* | -5.712 | D3 |  |  |
| S14* | -7.108 | 0.907 | 1.67075 | 19.24 |
| S15* | -5.123 | 0.38 |  |  |
| S16* | -10.035 | 0.65 | 1.54397 | 55.93 |
| S17* | 9.817 | D4 |  |  |
| S18 | infinity | 0.11 | 1.5168 | 64.2 |
| S19 | infinity | 1.11 |  |  |
| IMG | infinity | -0.01 |  |  |

Table 5 shows the aspherical surface coefficients in the second numerical example.

[Table 5]

|  | K | A | B | C | D | E |
|---|---|---|---|---|---|---|
| S4 | -0.02576 | -7.33E-05 | -8.36E-06 | -2.98E-07 | -3.17E-08 | -5.77E-10 |
| S5 | 1.92321 | 1.52E-05 | -1.59E-05 | -7.64E-07 | 3.66E-08 | 1.22E-09 |
| S6 | -2.7175 | 2.64E-04 | 9.15E-06 | -7.31E-07 | 4.19E-08 | 1.77E-08 |
| S7 | 0.82929 | 3.98E-04 | 3.42E-05 | 1.53E-06 | -2.90E-07 | 5.81E-08 |
| S8 | -8.20703 | -2.90E-03 | -4.86E-05 | 9.60E-06 | 1.91E-07 | -7.72E-08 |
| S9 | -0.44663 | -6.68E-04 | -7.47E-06 | -8.09E-06 | 4.13E-06 | -1.20E-07 |
| S910 | -15.7712 | -3.46E-04 | -1.39E-05 | -2.04E-06 | 1.30E-06 | 1.07E-07 |
| S11 | -14.2568 | -7.06E-04 | -4.48E-05 | 1.90E-05 | -1.26E-06 | 1.00E-07 |
| S12 | -16.4691 | 7.99E-04 | -7.69E-05 | 1.57E-05 | 1.77E-07 | -1.53E-08 |
| S13 | 0.38561 | 4.31E-04 | -2.19E-06 | 7.59E-06 | -1.23E-06 | 1.01E-07 |
| S14 | -14.8678 | 1.41E-03 | 4.66E-04 | -2.60E-05 | 3.96E-06 | -2.44E-08 |
| S15 | -7.21751 | 2.00E-03 | -3.61E-04 | 9.64E-05 | -6.10E-06 | 7.96E-07 |
| S16 | 12.12962 | -9.33E-03 | 4.03E-04 | -3.04E-05 | 1.67E-05 | -8.51E-07 |
| S17 | -59.4119 | -7.52E-03 | 4.91E-04 | -6.26E-06 | 1.25E-06 | -1.96E-07 |

Table 6 shows the lens spacing, the angle of view, and the F number in the second numerical example.

[Table 6]

|  | Wide angle end | Telephoto end |
|---|---|---|
| D0 | infinity | infinity |
| D1 | 8.92584 | 1.8 |
| D2 | 3.04491 | 10.1704 |
| D3 | 6.19936 | 0.798 |
| D4 | 1.0996 | 6.50126 |
| FOV | 9.442 | 5.666 |
| FNO | 2.903 | 4.935 |

<Third numerical example>

FIGS. 13 and 14 illustrate the lens assembly 100-3 of the third numerical example, according to various embodiments, and Table 7 shows, for example, design data of the third numerical example.

[Table 7]

| Lens surface | R | Dn | nd | vd |
|---|---|---|---|---|
| obj | infinity | D0 |  |  |
| S1 | infinity | 2.5 | 1.5168 | 64.2 |
| S2 | infinity | 2.5 | 1.5168 | 64.2 |
| S3 | infinity | D1 |  |  |
| S4(ST)* | 4.568 | 1.238 | 1.5348 | 55.71 |
| S5* | 36.697 | 0.154 |  |  |
| S6* | 10.324 | 0.6 | 1.61443 | 25.96 |

(continued)

| Lens surface | R | Dn | nd | vd |
|---|---|---|---|---|
| S7* | 4.884 | D2 | | |
| S8* | -6.249 | 0.6 | 1.54397 | 55.93 |
| S9* | 9.564 | 0.042 | | |
| S10* | 7.611 | 1.287 | 1.67075 | 19.24 |
| S11* | 5.731 | 0.041 | | |
| S12* | 4.366 | 2.104 | 1.5348 | 55.71 |
| S13* | -5.087 | D3 | | |
| S14* | -6.271 | 0.847 | 1.67075 | 19.24 |
| S15* | -4.663 | 0.393 | | |
| S16* | -8.471 | 0.6 | 1.54397 | 55.93 |
| S17* | 7.782 | D4 | | |
| S18 | infinity | 0.11 | 1.5168 | 64.2 |
| S19 | infinity | 0.363 | | |
| IMG | infinity | 0 | | |

Table 8 shows the aspherical surface coefficients in the third numerical example.

[Table 8]

| | K | A | B | C | D | E |
|---|---|---|---|---|---|---|
| S4 | 0.04117 | 3.99E-05 | -2.57E-05 | -1.63E-06 | 8.82E-08 | -8.24E-08 |
| S5 | 3.90185 | 8.05E-05 | -1.98E-05 | -2.88E-06 | -3.99E-07 | 3.09E-08 |
| S6 | 0.79044 | 9.12E-04 | 4.63E-05 | -5.32E-06 | -3.86E-07 | 1.87E-07 |
| S7 | 1.06275 | 1.27E-03 | 7.37E-05 | 5.71E-06 | -2.36E-06 | 4.43E-07 |
| S8 | -9.64917 | -1.47E-03 | 4.29E-05 | 7.49E-06 | -2.28E-06 | 4.31E-07 |
| S9 | 11.19486 | -1.47E-03 | 3.20E-05 | -1.32E-05 | 9.02E-06 | -3.37E-07 |
| S910 | 2.38397 | -1.15E-03 | -1.01E-04 | 1.86E-05 | 8.42E-07 | 1.64E-07 |
| S11 | -1.42001 | 1.48E-04 | 3.04E-05 | 7.55E-06 | -1.20E-06 | -9.94E-08 |
| S12 | -5.28116 | 1.04E-03 | -1.21E-04 | 1.60E-05 | -1.66E-06 | 3.80E-08 |
| S13 | 0.64606 | 2.91E-04 | -7.17E-05 | 5.39E-06 | -1.56E-06 | 8.48E-08 |
| S14 | -11.0459 | 1.68E-03 | 1.79E-04 | -7.17E-06 | 1.27E-05 | -9.39E-07 |
| S15 | -7.0284 | 4.66E-04 | -6.51E-04 | 1.88E-04 | -7.25E-06 | 3.63E-07 |
| S16 | -0.96391 | -1.60E-02 | 1.09E-03 | 4.20E-05 | -2.92E-06 | -5.03E-07 |
| S17 | -31.7894 | -1.14E-02 | 2.05E-03 | -2.35E-04 | 1.76E-05 | -7.15E-07 |

Table 9 shows the lens spacing, the angle of view, and the F number in the third numerical example.

[Table 9]

| | Wide angle end | Telephoto end |
|---|---|---|
| D0 | infinity | infinity |
| D1 | 7 | 1.8 |

(continued)

|  | Wide angle end | Telephoto end |
|---|---|---|
| D2 | 1.71427 | 6.91349 |
| D3 | 5.12481 | 0.84293 |
| D4 | 1.57861 | 5.86155 |
| FOV | 12.537 | 7.446 |
| FNO | 2.872 | 4.894 |

<(Fourth numerical example>

FIGS. 17 and 18 illustrate the lens assembly 100-4 of the fourth numerical example, according to various embodiments, and Table 10 shows, for example, design data of the fourth numerical example.

[Table 10]

| Lens surface | R | Dn | nd | vd |
|---|---|---|---|---|
| obj | infinity | D0 |  |  |
| S1 | infinity | 2.25 | 1.5168 | 64.2 |
| S2 | infinity | 2.25 | 1.5168 | 64.2 |
| S3 | infinity | D1 |  |  |
| S4(ST)* | 4.381 | 1.152 | 1.5348 | 55.71 |
| S5* | 27.623 | 0.248 |  |  |
| S6* | 8.946 | 0.6 | 1.61443 | 25.96 |
| S7* | 4.444 | D2 |  |  |
| S8* | -7.111 | 0.6 | 1.54397 | 55.93 |
| S9* | 10.818 | 0.041 |  |  |
| S10* | 8.072 | 0.904 | 1.67075 | 19.24 |
| S11* | 5.894 | 0.039 |  |  |
| S12* | 4.868 | 1.828 | 1.5348 | 55.71 |
| S13* | -4.972 | D3 |  |  |
| S14* | -5.852 | 0.778 | 1.67075 | 19.24 |
| S15* | -4.357 | 0.362 |  |  |
| S16* | -7.967 | 0.6 | 1.54397 | 55.93 |
| S17* | 7.926 | D4 |  |  |
| S18 | infinity | 0.11 | 1.5168 | 64.2 |
| S19 | infinity | 0.384 |  |  |
| IMG | infinity | 0 |  |  |

Table 11 shows the aspherical surface coefficients in the fourth numerical example.

[Table 11]

|  | K | A | B | C | D | E |
|---|---|---|---|---|---|---|
| S4 | 0.0219 | -3.41E-05 | -3.07E-05 | -2.45E-07 | 1.23E-07 | -8.99E-08 |
| S5 | 1.54289 | -5.40E-05 | -2.00E-05 | -2.11E-06 | -1.93E-07 | 1.14E-08 |

(continued)

|  | K | A | B | C | D | E |
|---|---|---|---|---|---|---|
| S6 | -0.27253 | 8.21E-04 | 2.07E-05 | -5.75E-06 | -7.63E-07 | 2.88E-07 |
| S7 | 0.90148 | 9.24E-04 | 4.00E-05 | 1.98E-06 | -4.05E-06 | 8.08E-07 |
| S8 | -8.63199 | -2.11E-03 | 1.04E-05 | 4.67E-06 | -1.11E-06 | 2.90E-07 |
| S9 | 11.56473 | -1.56E-03 | 5.44E-05 | -2.49E-05 | 1.15E-05 | 5.20E-07 |
| S10 | 2.44824 | -1.19E-03 | -1.66E-04 | 3.58E-05 | -4.57E-06 | 1.20E-06 |
| S11 | -2.24542 | -2.64E-04 | 3.84E-05 | 1.76E-05 | 5.93E-06 | -1.56E-06 |
| S12 | -6.00431 | 1.25E-03 | -1.53E-04 | 3.28E-05 | 7.02E-06 | -1.26E-06 |
| S13 | 0.39175 | 5.19E-04 | -9.49E-05 | 1.94E-05 | -5.45E-06 | 7.64E-07 |
| S14 | -12.8219 | 6.95E-04 | 2.84E-04 | -3.91E-05 | 1.87E-05 | -1.36E-06 |
| S15 | -7.91538 | -1.21E-04 | -6.77E-04 | 1.96E-04 | -1.50E-05 | 1.48E-06 |
| S16 | -3.75765 | -1.63E-02 | 1.51E-03 | -1.19E-04 | 1.10E-05 | 2.65E-07 |
| S17 | -47.634 | -9.79E-03 | 1.70E-03 | -1.94E-04 | 1.47E-05 | -4.54E-07 |

Table 12 shows the lens spacing, the angle of view, and the F number in the fourth numerical example.

[Table 12]

|  | Wide angle end | Telephoto end |
|---|---|---|
| D0 | infinity | infinity |
| D1 | 7.20667 | 1.8 |
| D2 | 1.45528 | 6.86196 |
| D3 | 5.04293 | 0.861 |
| D4 | 1.4471 | 5.62905 |
| FOV | 12.969 | 7.773 |
| FNO | 2.872 | 4.883 |

Table 13 shows Formulae 1 to 3 and values for the total track length (TTL) in the lens assemblies according to the first to fourth numerical examples.

[Table 13]

|  | Formula 1 0.5<(EFL1G/ EFLW)<3.0 | Formula 2 0.1<(EFL2G / EFLT)<1.0 | Formula 3 (Ld/D)<1 | TTL ≤ 35 mm |
|---|---|---|---|---|
| First numerical example | 1.4 | 0.62 | 0.914 | 34.3 |
| Second numerical example | 1.58 | 0.54 | 0.92 | 34.3 |
| Third numerical example | 1.42 | 0.59 | 0.887 | 28.8 |
| Fourth numerical example | 1.49 | 0.61 | 0.869 | 27.3 |

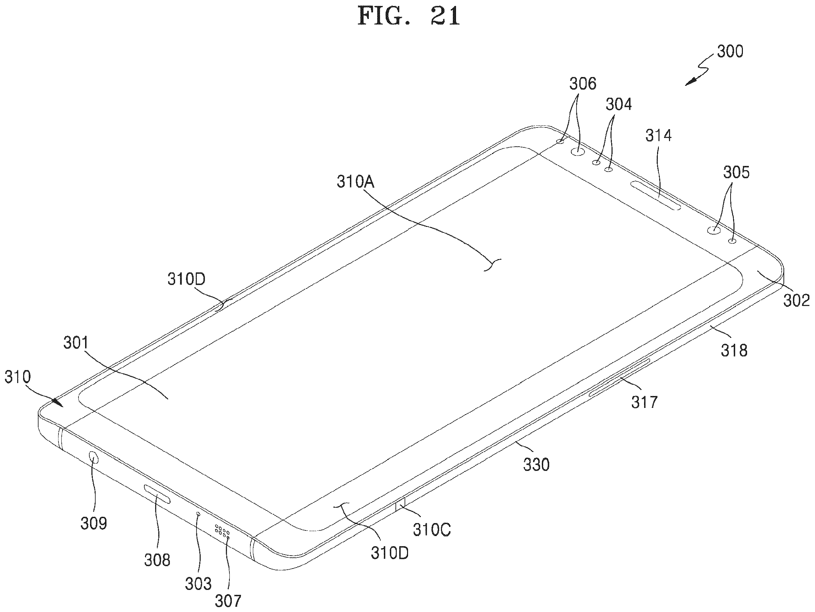

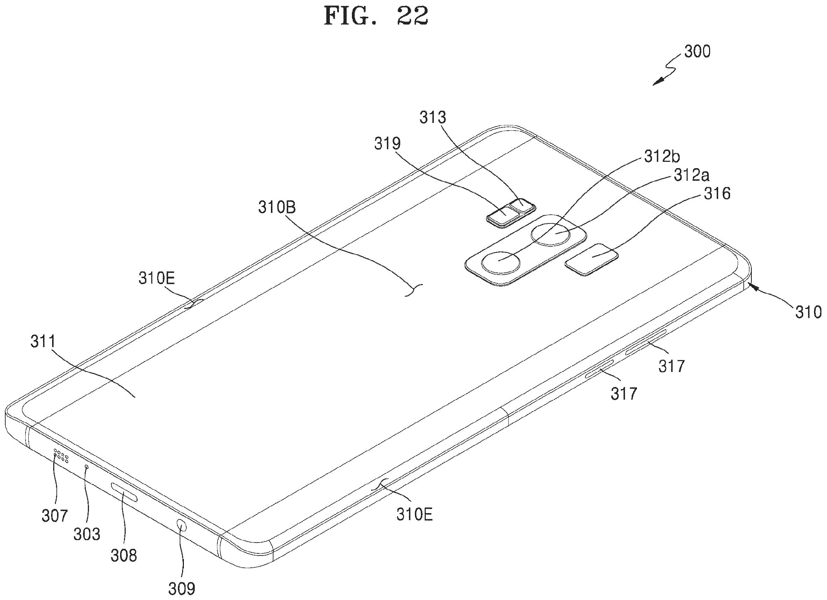

The lens assembly according to various embodiments may be applied to, for example, an electronic device including an image sensor. The lens assembly according to an example embodiment may be applied to various electronic devices, such as digital cameras, interchangeable lens cameras, video cameras, mobile phone cameras, cameras for small mobile devices, VR, AR, drones, or unmanned aerial vehicles. FIGS. 21 and 22 illustrate an example of an electronic device including a lens assembly according to an example embodiment. FIGS. 21 and 22 illustrate an example in which an electronic device is applied to a mobile phone, but the present disclosure is not limited thereto. FIG. 21 illustrates the front surface of the mobile phone, and FIG. 22 illustrates the back surface of the mobile phone.

An electronic device 300 according to an embodiment may include a housing 310 including a first surface (or a front surface) 310A, a second surface (or a back surface) 310B, and a side surface 310C surrounding a space between the first surface 310A and the second surface 310B. In another embodiment (not shown), the housing 310 may refer to a structure forming some of the first surface 310A, the second surface 310B, and the side surface 310C. According to an embodiment, the first surface 310A may be formed by a front plate 302 (e.g., a polymer plate or a glass plate including various coating layers) that is at least partially transparent. In another embodiment, the front plate 302 may be coupled to the housing 310 to form an inner space with the housing 310. In various embodiments, the 'inner space' may be an inner space of the housing 310 and refer to a space accommodating at least a portion of a display 301.

According to various embodiments, the second surface 310B may be formed by a back plate 311 that is substantially opaque. The back plate 311 may be formed of, for example, coated or tinted glass, ceramic, polymer, metal (e.g., aluminum, stainless steel (STS), or magnesium), or a combination of at least two of these materials. The side surface 310C may be formed by a side bezel structure (or a "side member") 318 that is coupled to the front plate 302 and the back plate 311 and includes metal and/or polymer. In various embodiments, the back plate 311 and the side bezel structure 318 may be integrally formed as a single body and include the same material as each other (e.g., a metal material such as aluminum).

In the illustrated embodiment, the front plate 302 may include two first regions 310D, which are curved from the first surface 310A toward the back plate 311 and thus extended seamlessly, at both ends of the long edge of the front plate 302. The back plate 311 may include two second regions 310E, which are curved from the second surface 310B toward the front plate 302 and thus extended seamlessly, at both ends of the long edge of the back plate 311. In various embodiments, the front plate 302 (or the back plate 311) may include only one of the first regions 310D (or the second regions 310E). In another embodiment, some of the first regions 310D or the second regions 310E may not be included. In the embodiments described above, when the electronic device is viewed from the side, the side bezel structure 318 may have a first thickness (or width) on the side that does not include the first region 310D or the second region 310E (e.g., the side where a connector hole 308 is formed) and may have a second thickness less than the first thickness on the side that includes the first region 310D or the second region 310E (e.g., the side where a key input device 317 is arranged).

According to an embodiment, the electronic device 300 may include at least one of a display 301, audio modules 303, 307, and 314, sensor modules 304, 316, and 319, camera modules 305, 312a, and 312b, a key input device 317, a light-emitting device 306, and connector holes 308 and 309. In various embodiments, the electronic device 300 may omit at least one of the elements (e.g., the key input device 317 or the light-emitting device 306) or may further include other elements.

The display 301 may be exposed through, for example, a substantial portion of the front plate 302. In various embodiments, at least a portion of the display 301 may be exposed through the front plate 302 forming the first surface 310A and the first region 310D of the side surface 310C. In various embodiments, the corner of the display 301 may be formed substantially in the same shape as the adjacent edge of the front plate 302. In another embodiment (not shown), in order to expand the exposed area of the display 301, the distance between the outer edge of the display 301 and the outer edge of the front plate 302 may be substantially the same.

In another embodiment (not shown), a recess or an opening may be formed in a portion of a screen display area (e.g., an active area) of the display 301 or an area (e.g., an inactive area) outside the screen display area of the display 301, and at least one of the audio module 314, the sensor module 304, the camera module 305, and the light-emitting device 306 aligned with the recess or the opening may be included. Alternatively, at least one of the audio module 314, the sensor module 304, the camera module 305, the fingerprint sensor 316, and the light-emitting device 306 may be included on the back surface of the screen display area of the display 301. Alternatively, the display 301 may be coupled to or arranged adjacent to a touch sensing circuit, a pressure sensor capable of measuring intensity (pressure) of a touch, and/or a digitizer that detects a magnetic field-type stylus pen. In various embodiments, at least a portion of the sensor modules 304 and 319 and/or at least a portion of the key input device 317 may be arranged in the first regions 310D and/or the second regions 310E.

The audio modules 303, 307, and 314 may include a microphone hole 303 and speaker holes 307 and 314. A microphone for obtaining external sound may be arranged inside the microphone hole 303. In various embodiments, a plurality of microphones may be arranged to detect the direction of sound. The speaker holes 307 and 314 may include an external speaker hole 307 and a call receiver hole 314. In various embodiments, the speaker holes 307 and 314 and the microphone hole 303 may be implemented as a single hole, or a speaker may be included without the speaker holes 307 and 314 (e.g., a piezo speaker).

The sensor modules 304, 316, and 319 may generate electrical signals or data values corresponding to an internal operating state of the electronic device 300 or an external environmental state. The sensor modules 304, 316, and 319 may include, for example, a first sensor module 304 (e.g., a proximity sensor) and/or a second sensor module (not shown) (e.g., a fingerprint sensor) arranged on the first surface 310A of the housing 310, and/or a third sensor module 319 (e.g., a heart rate monitoring (HRM) sensor) and/or a fourth sensor module 316 (e.g., a fingerprint sensor) arranged on the second surface 310B of the housing 310. The fingerprint sensor may be arranged on both the first surface 310A (e.g., the display 301) and the second surface 310B of the housing 310. The electronic device 300 may further include at least one of sensor modules (not shown), for example, a gesture sensor, a gyro sensor, an air pressure sensor, a magnetic sensor, an acceleration sensor, a grip sensor, a proximity sensor, a color sensor, an IR sensor, a biometric sensor, a temperature sensor, a humidity sensor, or an illumination sensor.

The camera modules 305, 312a, and 312b may include a first camera module 305 arranged on the first surface 310A of the electronic device 300, a second camera module 312a and a third camera module 312b arranged on the second surface 310B, and/or a flash 313. The camera modules 305, 312a, and 312b may include one or more lenses, an image sensor, and/or an image signal processor. For example, the camera modules 305, 312a, and 312b may include the lens assemblies according to various embodiments described with reference to FIGS. 1 to 120. The flash 313 may include, for example, a light-emitting diode (LED) or a xenon lamp. In various embodiments, two or more lenses (IR camera, wide-angle and telephoto lenses) and image sensors may be arranged on one surface of the electronic device 101.

The key input device 317 may be arranged on the side surface 310C of the housing 310. In another embodiment, the electronic device 300 may not include some or all of the key input devices 317, and the key input devices 317 that are not included in the electronic device 300 may be implemented in other forms such as soft keys on the display 301. In various embodiments, the key input device may include the sensor module 316 arranged on the second surface 310B of the housing 310.

The light-emitting device 306 may be arranged on, for example, the first surface 310A of the housing 310. The light-emitting device 306 may provide, for example, state information of the electronic device 101 in the form of light. In another embodiment, the light-emitting device 306 may provide, for example, a light source interworking with the operation of the camera module 305. The light-emitting device 306 may include, for example, an LED, an IR LED, and a xenon lamp.

The connector holes 308 and 309 may include a first connector hole 308 capable of accommodating a connector (e.g., a universal serial bus (USB) connector) for transmitting and receiving power and/or data to and from an external electronic device, and/or a second connector hole (e.g., an earphone jack) 309 capable of accommodating a connector for transmitting and receiving an audio signal to and from an external electronic device.

The electronic device 300 illustrated in FIGS. 21 and 22 corresponds to one example, and does not limit the type of device to which the technical concept disclosed in the present disclosure is applied. The technical concept disclosed in the present disclosure may be applied to various user devices including the first camera module 305 arranged on the first surface 310A and the second camera module 312a and the third camera module 312b arranged on the second surface 310B. For example, the technical concept disclosed in the present disclosure may also be applied to a tablet or a laptop, or a foldable electronic device that is foldable horizontally or vertically by employing a flexible display and a hinge structure. In addition, the present technical concept may be applied to even a case where the first camera module 305, the second camera module 312a, and the third camera module 312b may be arranged to face different directions through rotation, folding, deformation, etc. of the device.

According to various embodiments, the illustrated electronic device 300 may be a portion of a rollable electronic device. The "rollable electronic device" may refer to an electronic device capable of being at least partially wound or rolled or capable of being accommodated in a housing (e.g., the housing 310 of FIGS. 21 and 22) because the display is bendable. The rollable electronic device may unfold the display or expose a larger area of the display to the outside according to a user's need, so that the screen display area may be expanded in use.

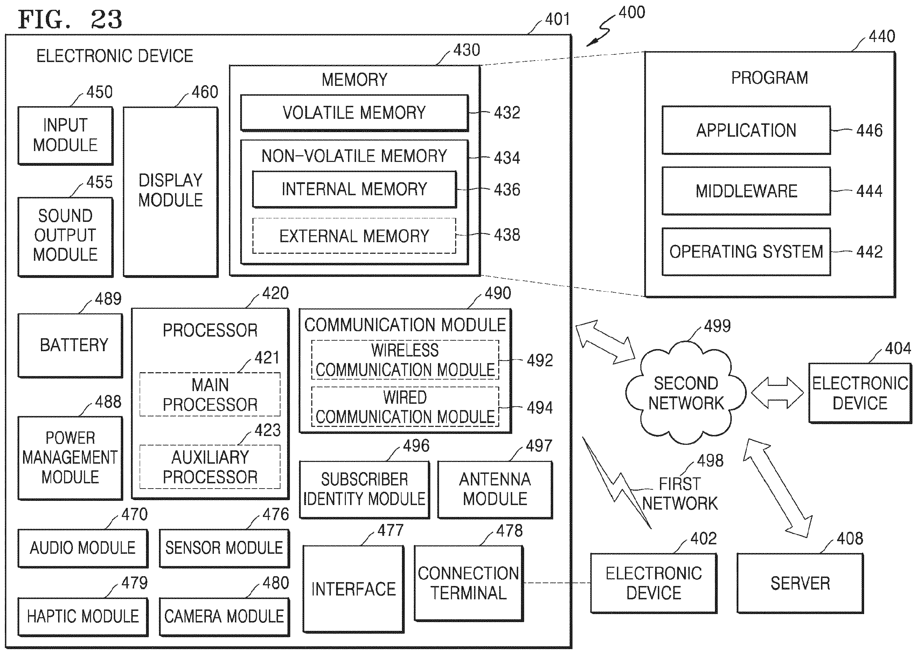

FIG. 23 is a block diagram of an electronic device 401 in a network environment 400, according to various embodiments. Referring to FIG. 23, the electronic device 401 in the network environment 400 may communicate with an electronic device 402 via a first network 498 (e.g., a short-range wireless communication network), or may communicate with at least one of an electronic device 404 or a server 408 via a second network 499 (e.g., a long-range wireless communication network). According to an embodiment, the electronic device 401 may communicate with the electronic device 404 through the server 408. According to an embodiment, the electronic device 401 may include a processor 420, a memory 830, an input module 450, a sound output module 455, a display module 460, an audio module 470, a sensor module 476, an interface 477, a connection terminal 478, a haptic module 479, a camera module 480, a power management module 488, a battery 489, a communication module 490, a subscriber identity module 496, or an antenna module 497. In some embodiments, at least one of these elements (e.g., the connection terminal 478) may be omitted in the electronic device 401, or one or more other elements may be added to the electronic device 401. In some embodiments, some elements (e.g., the sensor module 476, the camera module 480, or the antenna module 497) may be integrated into one element (e.g., the display module 460).

The processor 420 may execute software (e.g., the program 440, etc.) to control one or more other elements (e.g., hardware or software elements, etc.) of the electronic device 401 connected to the processor 420, and may perform various data processing or operations. According to an embodiment, as at least part of data processing or operations, the processor 420 may store, in a volatile memory 432, commands or data received from other elements (e.g., the sensor module 476 or the communication module 490), may process the commands or data stored in the volatile memory 432, and may store result data in a non-volatile memory 434. According to an embodiment, the processor 420 may include a main processor 421 (e.g., a central processing unit or an application processor) or an auxiliary processor 423 (e.g., a graphics processing unit, a neural processing unit (NPU), an image signal processor, a sensor hub processor, or a communication processor) that is operable independently of or in conjunction with the main processor 421. For example, when the electronic device 401 includes the main processor 421 and the auxiliary processor 423, the auxiliary processor 423 may use less power than the main processor 421 or may be set to be specialized for a designated function. The auxiliary processor 423 may be implemented separately from the main processor 421 or may be implemented as a portion of the main processor 821.

For example, the auxiliary processor 423 may control at least some of the functions or states related to at least one of the elements of the electronic device 401 (e.g., the display module 460, the sensor module 476, or the communication module 490) on behalf of the main processor 421 while the main processor 421 is in an inactive state (e.g., a sleep state) or together with the main processor 421 while the main processor 421 is in an active state (e.g., an application execution state). According to an embodiment, the auxiliary processor 423 (e.g., the image signal processor or the communication processor) may be implemented as a portion of other functionally related elements (e.g., the camera module 480 or the communication module 490). According to an embodiment, the auxiliary processor 423 (e.g., the NPU) may include a hardware structure specialized for processing an artificial intelligence model. The artificial intelligence model may be generated through machine learning. For example, such learning may be performed in the electronic device 401 itself in which the artificial intelligence model is executed, or may be performed through a separate server (e.g., the server 408). A learning algorithm may include, for example, supervised learning, unsupervised learning, semi-supervised learning, or reinforcement learning, but the present disclosure is not limited to the above example. The artificial intelligence model may include a plurality of artificial neural network layers. The artificial intelligence model may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but the present disclosure is not limited to the above example. The artificial intelligence model may additionally or alternatively include a software structure in addition to the hardware structure.

The memory 430 may store a variety of data used by at least one element (e.g., the processor 420 or the sensor module 476) of the electronic device 401. The data may include, for example, the software (e.g., the program 440) and input data or output data for commands related thereto. The memory 430 may include the volatile memory 432 or the non-volatile memory 434.

The program 440 may be stored in the memory 430 as software and may include, for example, an operating system 442, a middleware 444, or an application 446.

The input module 450 may receive, from the outside of the electronic device 401 (e.g., the user), commands or data to be used by the elements (e.g., the processor 420) of the electronic device 401. The input module 450 may include, for example, a microphone, a mouse, a keyboard, a key (e.g., a button), or a digital pen (e.g., a stylus pen).

The sound output module 455 may output a sound signal to the outside of the electronic device 401. The sound output module 455 may include, for example, a speaker or a receiver. The speaker may be used for general purposes, such as multimedia reproduction or recording reproduction. The receiver may be used to receive an incoming call. According to an embodiment, the receiver may be implemented separately from the speaker or may be implemented as part of the speaker.

The display module 460 may visually provide information to the outside of the electronic device 401 (e.g., the user). The display module 460 may include, for example, a display, a hologram device, a projector, and a control circuit configured to control the corresponding device. According to an embodiment, the display module 460 may include a touch sensor configured to detect a touch or a pressure sensor configured to measure the intensity of force generated by the touch.

The audio module 470 may convert a sound into an electrical signal or vice versa. According to an embodiment, the audio module 470 may obtain a sound through the input module 450, or may output a sound through the sound output module 455, or a speaker or a headphone of an external electronic device (e.g., the electronic device 402) directly or wirelessly connected to the electronic device 401.

The sensor module 476 may sense an operating state (e.g., power or temperature) of the electronic device 401 or an external environmental state (e.g., a user condition), and may generate an electrical signal or a data value corresponding to the sensed state. According to an embodiment, the sensor module 476 may include, for example, a gesture sensor, a gyro sensor, an air pressure sensor, a magnetic sensor, an acceleration sensor, a grip sensor, a proximity sensor, a color sensor, an IR sensor, a biometric sensor, a temperature sensor, a humidity sensor, or an illumination sensor.

The interface 477 may support one or more designated protocols that may be used by the electronic device 401 so as to directly or wirelessly connect to the external electronic device (e.g., the electronic device 402). According to an embodiment, the interface 477 may include, for example, a high definition multimedia interface (HDMI), a USB interface, a secure digital (SD) card interface, or an audio interface.

The connection terminal 478 may include a connector through which the electronic device 401 may be physically connected to the external electronic device (e.g., the electronic device 402). According to an embodiment, the connection terminal 478 may include an HDMI connector, a USB connector, an SD card connector, or an audio connector (e.g., a headphone connector).

The haptic module 479 may convert an electrical signal into a mechanical stimulus (e.g., vibration or movement) or an electrical stimulus which a user may recognize through a tactile or kinesthetic sense. According to an embodiment, the haptic module 479 may include, for example, a motor, a piezoelectric element, or an electrical stimulator.

The camera module 480 may capture a still image and a moving image. According to an embodiment, the camera module 480 may include one or more lenses, image sensors, image signal processors, or flashes.

The power management module 488 may manage power to be supplied to the electronic device 401. According to an embodiment, the power management module 488 may be implemented as part of a power management integrated circuit (PMIC).

The battery 489 may supply power to at least one element of the electronic device 401. According to an embodiment, the battery 489 may include, for example, a non-rechargeable primary cell, a rechargeable secondary cell, or a fuel cell.

The communication module 490 may establish a direct (e.g., wired) communication channel or a wireless communication channel between the electronic device 401 and the external electronic device (e.g., the electronic device 402, the electronic device 404, or the server 408), and may support communication through the established communication channel. The communication module 490 may include one or more communication processors that operate independently of the processor 420 (e.g., the application processor) and support direct(e.g., wired) communication or wireless communication. According to an embodiment, the communication module 490 may include a wireless communication module 492 (e.g., a cellular communication module, a short-range wireless communication module, or a global navigation satellite system (GNSS) communication module) or a wired communication module 494 (e.g., a local area network (LAN) communication module or a power line communication module). The corresponding communication module among these communication modules may communicate with the external electronic device 404 via the first network 498 (e.g., a short-range communication network such as Bluetooth, wireless fidelity (WiFi) direct, or Infrared data association (IrDA)) or the second network 499 (e.g., a long-range communication network such as a legacy cellular network, a 5th generation (5G) network, a next-generation communication network, Internet, or a computer network (e.g., LAN or wide area network (WAN)). These various types of communication modules may be integrated into one element (e.g., a single chip) or may be implemented as a plurality of elements (e.g., a plurality of chips) separate from each other. The wireless communication module 492 may identify or authenticate the electronic device 401 within the communication network, such as the first network 498 or the second network 499, by using subscriber information (e.g., international mobile subscriber identity (IMSI)) stored in the subscriber identity module 496.

The wireless communication module 492 may support a 5G network after a 4th generation (4G) network and a next-generation communication technology, for example, a new radio (NR) access technology. The NR access technology may support enhanced mobile broadband (eMBB), massive machine type communications (mMTC), or ultra-reliable and low-latency communications (URLLC). The wireless communication module 492 may support, for example, a high frequency band (e.g., mmWave band) in order to achieve a high throughput. The wireless communication module 492 may support various technologies for securing performance in a high frequency band, for example, beamforming, massive multiple-input and multiple-output (MIMO), full dimensional MIMO (FD-MIMO), array antenna, analog beamforming, or large scale antenna. The wireless communication module 492 may support various requirements defined for the electronic device 401, the external electronic device (e.g., the electronic device 404), or the network system (e.g., the second network 499). According to an embodiment, the wireless communication module 492 may support a peak data rate for eMBB realization (e.g., 20 Gbps or more), a loss coverage for mMTC realization (e.g., 164 dB or less), or U-plane latency for URLLC realization (e.g., downlink (DL) and uplink (UL) each less than 0.5 ms or round trip less than 1 ms).

The antenna module 497 may transmit a signal and/or power to the outside (e.g., the electronic device) or receive a signal and/or power from the outside (e.g., the electronic device). According to an embodiment, the antenna module 497 may include an antenna including a radiator made of a conductor or a conductive pattern on a substrate (e.g., a printed circuit board (PCB)). According to an embodiment, the antenna module 497 may include a plurality of antennas (e.g., an array antenna). In this case, at least one antenna suitable for the communication scheme used in the communication network, such as the first network 498 or the second network 499 may be selected from among the antennas by the communication module 490. The signal or power may be transmitted or received between the communication module 490 and the external electronic device through the selected at least one antenna. According to some embodiments, in addition to the radiator, other elements (e.g., a radio frequency integrated circuit (RFIC)) may be additionally formed as part of the antenna module 497.

According to various embodiments, the antenna module 497 may form a mmWave antenna module. According to an embodiment, the mmWave antenna module may include a PCB, an RFIC arranged on or adjacent to a first surface (e.g., a bottom surface) of the PCB and capable of supporting a designated high frequency band (e.g., mmWave band), and a plurality of antennas (e.g., an array antenna) arranged on or adjacent to a second surface (e.g., a top surface or a side surface) of the PCB and capable of transmitting or receiving a signal of the designated high frequency band.

At least some elements may be connected to each other through a communication scheme between peripheral devices (e.g., a bus, a general purpose input and output (GPIO), a serial peripheral interface (SPI), or a mobile industry processor interface (MIPI)), and may exchange a signal (e.g., a command or data) with each other.

According to an embodiment, the command or data may be transmitted or received between the electronic device 401 and the external electronic device 404 through the server 408 connected to the second network 499. The type of the external electronic device 402 or 404 may be identical to or different from the type of the electronic device 401. According to an embodiment, all or part of the operations that are performed by the electronic device 401 may be performed by one or more of the external electronic devices 402, 404, and 408. For example, when the electronic device 401 has to execute a certain function or service automatically or in response to a request from a user or other devices, the electronic device 401 may request one or more external electronic devices to execute at least part of the function or service instead of or in addition to executing the function or service by itself. The one or more external electronic devices receiving the request may execute at least part of the requested function or service or an additional function or service related to the request, and may transmit a result of the executing to the electronic device 401. The electronic device 401 may provide the result as it is or may provide the result as at least part of a response to the request by additionally processing the result. To this end, for example, cloud computing, distributed computing, mobile edge computing (MEC), or client-server computing technology may be used. The electronic device 401 may provide an ultra-low latency service by using, for example, distributed computing or mobile edge computing. In another embodiment, the external electronic device 404 may include an internet of things (IoT) device. The server 408 may be an intelligent server using machine learning and/or neural networks. According to an embodiment, the external electronic device 404 or the server 408 may be included in the second network 499. The electronic device 401 may be applied to intelligent services (e.g., smart home, smart city, smart car, or health care) based on 5G communication technology and IoT-related technology.

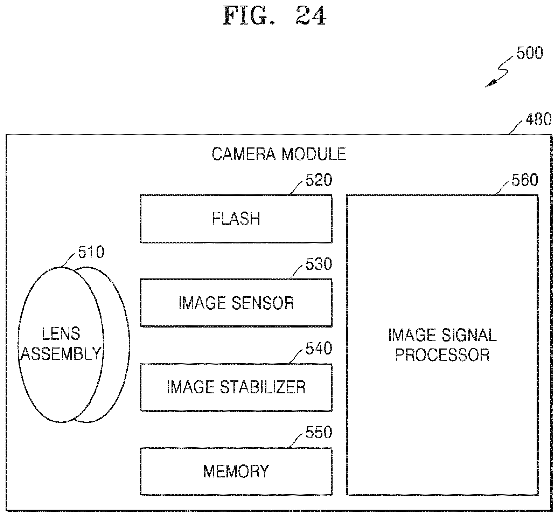

FIG. 24 is a block diagram 500 illustrating the camera module 480 according to various embodiments. Referring to FIG. 24, the camera module 480 may include a lens assembly 510, a flash 520, an image sensor 530, an image stabilizer 540, a memory 550 (e.g., a buffer memory), or an image signal processor 560. The lens assembly 510 may collect light emitted from an object that is an image capture target. The lens assembly 510 may include one or more lenses. The embodiments described with reference to FIGS. 1 to 20 may be applied to the lens assembly 510. According to an embodiment, the camera module 480 may include a plurality of lens assemblies 510. In this case, the camera module 480 may form, for example, a dual camera, a 360-degree camera, or a spherical camera. Some of the plurality of lens assemblies 510 may have the same lens properties (e.g., angle of view, focal length, autofocus, F number, or optical zoom), or at least one lens assembly may have one or more lens properties that are different from those of the other lens assemblies. The lens assembly 510 may include, for example, a wide-angle lens or a telephoto lens.

The flash 520 may emit light used to enhance light emitted or reflected from the object. According to an embodiment, the flash 520 may include one or more LEDs (e.g., a red-green-blue (RGB) LED, a white LED, an infrared LED, or an ultraviolet (UV) LED), or a xenon lamp. The image sensor 530 may obtain an image corresponding to the object by converting light, which is emitted or reflected from the object and transmitted through the lens assembly 510, into an electrical signal. According to an embodiment, the image sensor 530 may include, for example, one image sensor selected from among image sensors having different properties, such as an RGB sensor, a black and white (BW) sensor, an IR sensor, or a UV sensor, a plurality of image sensors having the same properties, or a plurality of image sensors having different properties. The image sensors included in the image sensor 530 may be implemented by using, for example, a CCD sensor or a CMOS sensor.

In response to the movement of the camera module 480 or the electronic device 401 including the same, the image stabilizer 540 may move one or more lenses included in the lens assembly 510 or the image sensor 530 in a specific direction, or may control operating characteristics of the image sensor 530 (e.g., may adjust a read-out timing, etc.). This makes it possible to compensate at least part of the negative effect of the movement on the image being captured. According to an embodiment, the image stabilizer 540 may sense the movement of the camera module 480 or the electronic device 401 by using a gyro sensor (not shown) or an acceleration sensor (not shown) arranged inside or outside the camera module 480. According to an embodiment, the image stabilizer 540 may be implemented as, for example, an optical image stabilizer. The memory 550 may at least temporarily store at least a portion of an image obtained through the image sensor 530 for a next image processing task. For example, when image obtainment according to a shutter is delayed, or when a plurality of images are obtained at a high speed, an obtained original image (e.g., a Bayer-patterned image or a high-resolution image) may be stored in the memory 550, and a copy image (e.g., a low-resolution image) corresponding thereto may be previewed through the display module 460. Thereafter, when a specified condition is satisfied (e.g., a user input or a system command), at least a portion of the original image stored in the memory 550 may be obtained and processed by, for example, the image signal processor 560. According to an embodiment, the memory 550 may be configured as at least a portion of the memory 430 or a separate memory operating independently of the memory 430.

The image signal processor 560 may perform at least one image processing on the image obtained through the image sensor 530 or the image stored in the memory 550. The at least one image processing may include, for example, depth map generation, three-dimensional modeling, panorama generation, feature point extraction, image synthesis, or image compensation (e.g., noise reduction, resolution adjustment, brightness adjustment, blurring, sharpening, or softening). Additionally or alternatively, the image signal processor 560 may perform control (e.g., exposure time control, read-out timing control, etc.) on at least one (e.g., the image sensor 530) of the elements included in the camera module 480. The image processed by the image signal processor 560 may be stored again in the memory 550 for additional processing, or may be provided to external elements of the camera module 480 (e.g., the memory 430, the display module 460, the electronic device 402, the electronic device 404, or the server 408). According to an embodiment, the image signal processor 560 may be configured as at least a portion of the processor 420, or may be configured as a separate processor that operates independently of the processor 420. When the image signal processor 560 is configured as a processor separate from the processor 420, at least one image processed by the image signal processor 560 may be displayed through the display module 460 as it is or after the processor 420 performs additional image processing thereon.

According to an embodiment, the electronic device 401 may include a plurality of camera modules 480 having different properties or functions from each other. In this case, for example, at least one of the plurality of camera modules 480 may be a wide-angle camera, and at least another thereof may be a telephoto camera. Similarly, at least one of the plurality of camera modules 480 may be a front camera, and at least another thereof may be a rear camera.

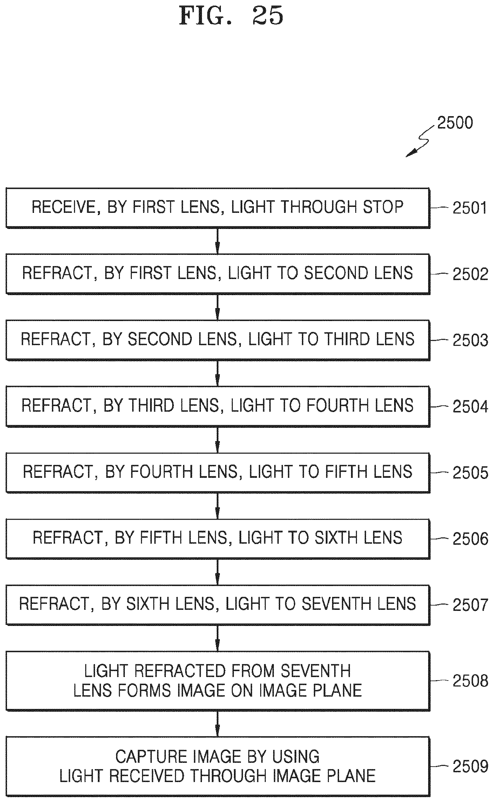

FIG. 25 illustrates a high-level flowchart 2500 of a method of performing image capturing by using a lens assembly (e.g., the lens assemblies 100-1, 100-2, 100-3, and 100-4 of FIGS. 1, 2, 9, 10, 13, 14, 17, and 18) in an electronic device according to various embodiments. Hereinafter, an image capturing method will be described with reference to the lens assembly 100-1 illustrated in FIG. 1.

According to an embodiment, in operation 2501, for example, the first lens L11 included in the lens assembly 100-1 may receive light through the stop ST. According to various embodiments, the stop ST may be arranged on the object side O of the first lens L11 of FIG. 1.

In operation 2502, for example, the first lens L11 included in the lens assembly may refract light to the second lens L21.

In operation 2503, for example, the second lens L21 included in the lens assembly may refract the light to the third lens L31.

In operation 2504, for example, the third lens L31 included in the lens assembly may refract the light to the fourth lens L41.

In operation 2505, for example, the first lens L41 included in the lens assembly may refract the light to the fifth lens L51.

In operation 2506, for example, the fifth lens L51 included in the lens assembly may refract the light to the sixth lens L61.

In operation 2507, for example, the sixth lens L61 included in the lens assembly may refract the light to the seventh lens L71.

In operation 2508, for example, the light refracted from the seventh lens L71 may form an image on the image plane IMG. According to various embodiments, the light may form an image on the image plane IMG through the optical device OD. The optical device OD may include, for example, at least one of a low pass filter, an IR-cut filter, or a cover glass.

In operation 2509, for example, the electronic device including the lens assembly (e.g., the electronic device 300 of FIGS. 21 and 22 and the electronic device 401 of FIG. 23) may capture the image by using the light received through the image plane IMG. For example, the image may be captured by using the image sensor (e.g., the image sensor 530 of FIG. 24) constituting at least a portion of the camera module (e.g., the camera module 480 of FIGS. 23 and 24) included in the electronic device. According to various embodiments, the lens assembly 100-1, 100-2, 100-3, or 100-4 including a plurality of lenses arranged from an object side to an image side where there is an image plane may include a reflective member RE that bends a first optical axis of light incident from the object side into a second optical axis, a first lens group G11 arranged on the second optical axis so that the light bent by the reflective member RE is incident thereon and having a positive refractive power, a second lens group G21 arranged on an image side of the first lens group G11 and having a positive refractive power, and a third lens group G31 arranged on an image side of the second lens group G21 and having a negative refractive power, wherein the first lens group G11 and the third lens group G31 may move toward the object side to perform zooming from a wide angle end to a telephoto end, the first lens group G11 may include a first lens L11 arranged closest to the object side and a second lens L21 arranged on an image side of the first lens L11, the first lens L11 may have an Abbe number greater than 50, and the second lens L21 may have an Abbe number less than or equal to 30.

The first lens group G11 or the third lens group G31 may be configured to perform focusing.

The lens assembly 100-1 may satisfy the following formulae.

$$0.5 < EFL1G / EFLW < 3.0 \qquad <Formula>$$

EFL1G represents the focal length of the first lens group, and EFLW represents the focal length of the lens assembly at the wide angle end.

The lens assembly 100-1 may satisfy the following formulae.

$$0.1 < EFL2G / EFLT < 1.0 \qquad <Formula>$$

EFL2G represents the focal length of the second lens group G21, and EFLT represents the focal length of the lens assembly 100-1 at the telephoto end.

The third lens group G31 may include the last lens L71 arranged closest to the image side and may satisfy the following formula.

$$Ld / D < 1 \qquad <Formula>$$

Ld represents the size of the clear aperture at the wide angle end of the last lens L71, and D represents the image circle size.

The total track length (TTL) of the lens assembly 100-1 may be less than or equal to 35 mm.

A lens is not provided on the object side of the reflective member R3.

The lens assembly 100-1 may be configured so that the first lens group G11, the second lens group G21, and the third lens group G31 move vertically or horizontally with respect to the second optical axis to perform image stabilization.

The lens assembly 100-1 may be configured so that the reflective member is tilted to perform image stabilization in the pitch direction.

The lens assembly 100-1 may be configured so that the first lens group G11, the second lens group G21, and the third lens group G31 move horizontally with respect to the second optical axis to perform image stabilization in the yaw direction.

The first lens L11 may have a positive refractive power and the second lens L21 may have a negative refractive power.

The first lens L11 and the second lens L21 may move for zooming.

The third lens group G31 may include a last lens L71 arranged closest to the image side, and the last lens L71 may be concave on the object side and have a negative refractive power.

The third lens group G31 may include a lens L61 arranged on the object side and having a positive refractive power and a lens L71 arranged closest to the image side and having a negative refractive power.

The second lens group G21 may include a third lens L31 having a negative refractive power, a fourth lens L41 having a positive or negative refractive power, and a fifth lens L51 having a positive refractive power.

All the lenses included in the lens assembly 100-1 may be provided with plastic lenses.

According to various embodiments, the electronic device may include a lens assembly 100-1 including a plurality of lenses arranged from an object side to an image side where there is an image plane, at least one camera module 480 that obtains information about an object from light incident through the lens assembly 100-1, and an image signal processor 560 that processes an image of the object based on the information, wherein the lens assembly 100-1 may include a reflective member RE that bends a first optical axis of light incident from the object side into a second optical axis, a first lens group G11 arranged on the second optical axis so that the light bent by the reflective member RE is incident thereon and having a positive refractive power, a second lens group G21 arranged on an image side of the first lens group G11 and having a positive refractive power, and a third lens group G31 arranged on an image side of the second lens group G21 and having a negative refractive power, the first lens group G11 and the third lens group G31 may move toward the object side to perform zooming from a wide angle end to a telephoto end, the first lens group G11 may include a first lens L11 arranged closest to the object side and a second lens L21 arranged on an image side of the first lens L11, the first lens L11 may have an Abbe number greater than 50, and the second lens L21 may have an Abbe number less than or equal to 30.

The embodiments disclosed in the present disclosure are presented for explanation and understanding of the disclosed technical content, and do not limit the scope of the technology described in the present disclosure. Therefore, the scope of the present disclosure should be construed as including all changes or various other embodiments based on the technical concept of the present disclosure. The embodiments described above are only examples, and various modifications and other equivalent embodiments may be made therefrom by those of ordinary skill in the art. Therefore, the true technical scope of protection according to the embodiments of the present disclosure should be determined by the technical concept of the invention set forth in the appended claims.

**Claims**

1. A lens assembly including a plurality of lenses arranged from an object side to an image side where there is an image plane, the lens assembly comprising:

   a reflective member that bends a first optical axis of light incident from the object side into a second optical axis;
   a first lens group arranged on the second optical axis so that the light bent by the reflective member is incident thereon and having a positive refractive power;
   a second lens group arranged on an image side of the first lens group and having a positive refractive power; and
   a third lens group arranged on an image side of the second lens group and having a negative refractive power,
   wherein the first lens group and the third lens group move toward the object side to perform zooming from a wide angle end to a telephoto end,
   the first lens group comprises a first lens arranged closest to the object side and a second lens arranged on an image side of the first lens,
   the first lens has an Abbe number greater than 50, and
   the second lens has an Abbe number less than or equal to 30.

2. The lens assembly of claim 1, wherein the first lens group or the third lens group is configured to perform focusing.

3. The lens assembly according to any one of the previous claims, wherein the lens assembly satisfies the following Formula:

$$0.5 < EFL1G / EFLW < 3.0 \quad \text{(Formula 1),}$$

   wherein EFL1G represents a focal length of the first lens group, and EFLW represents a focal length of the lens assembly at the wide angle end.

4. The lens assembly according to any one of the previous claims, wherein the lens assembly satisfies the following Formula:

$$0.1 < EFL2G / EFLT < 1.0 \quad \text{(Formula 2),}$$

   wherein EFL2G represents a focal length of the second lens group, and EFLT represents a focal length of the lens assembly at the telephoto end.

5. The lens assembly according to any one of the previous claims, wherein the third lens group comprises a last lens arranged closest to the image side, and

   the lens assembly satisfies the following Formula:

$$Ld / D < 1 \quad \text{(Formula 3),}$$

   wherein Ld represents a size of a clear aperture at the wide angle end of the last lens, and D represents an image circle size.

6. The lens assembly according to any one of the previous claims, wherein a total track length, TTL, of the lens assembly is less than or equal to 35 mm.

7. The lens assembly according to any one of the previous claims, wherein a lens is not provided on an object side of the reflective member.

8. The lens assembly according to any one of the previous claims, wherein the first lens group, the second lens group, and the third lens group are configured to move vertically or horizontally with respect to the second optical axis to perform image stabilization.

9. The lens assembly according to any one of the previous claims, wherein the reflective member is tilted to perform image stabilization in a pitch direction.

10. The lens assembly according to any one of the previous claims, wherein the first lens group, the second lens group, and the third lens group are configured to move horizontally with respect to the second optical axis to perform image stabilization in a yaw direction.

11. The lens assembly according to any one of the previous claims, wherein the first lens has a positive refractive power and the second lens has a negative refractive power.

12. The lens assembly according to any one of the previous claims, wherein the first lens and the second lens move for zooming.

13. An electronic device comprising:

a lens assembly comprising a plurality of lenses arranged from an object side to an image side where there is an image plane;
at least one camera module that obtains information about an object from light incident through the lens assembly; and
an image signal processor that processes an image of the object based on the information,
wherein the lens assembly comprises:

a reflective member that bends a first optical axis of light incident from the object side into a second optical axis;
a first lens group arranged on the second optical axis so that the light bent by the reflective member is incident thereon and having a positive refractive power;
a second lens group arranged on an image side of the first lens group and having a positive refractive power; and
a third lens group arranged on an image side of the second lens group and having a negative refractive power, the first lens group and the third lens group move toward the object side to perform zooming from a wide angle end to a telephoto end,
the first lens group comprises a first lens arranged closest to the object side and a second lens arranged on an image side of the first lens,
the first lens has an Abbe number greater than 50, and

the second lens has an Abbe number less than or equal to 30.

14. The electronic device of claim 13, wherein the first lens group or the third lens group is configured to perform focusing.

15. The electronic device according to any one of the claims13-14, wherein the electronic device satisfies the following Formula:

$$0.5 < EFL1G / EFLW < 3.0 \qquad \text{(Formula 1)},$$

wherein EFL1G represents a focal length of the first lens group, and EFLW represents a focal length of the lens assembly at the wide angle end.

# FIG. 1

EP 4 318 070 A1

EP 4 318 070 A1

# FIG. 2

# FIG. 3

# FIG. 4

## FIG. 5

## FIG. 6

# FIG. 7

EP 4 318 070 A1

| | 656.2725 NM |
|---|---|
| | 587.5618 NM |
| | 546.0740 NM |
| | 486.1327 NM |
| | 435.8343 NM |

LONGITUDINAL SPHERICAL ABERRATION

ASTIGMATISM

DISTORTION

Y    X    IMG HT

IMG HT

1.00

0.75

0.50

0.25

3.05

2.29

1.52

0.76

3.05

2.29

1.52

0.76

-0.050 -0.025  0.0  0.025  0.050
FOCUS (MILLIMETERS)

-0.050 -0.025  0.0  0.025  0.050
FOCUS (MILLIMETERS)

-5.0  -2.5  0.0  2.5  5.0
% DISTORTION

# FIG. 8

EP 4 318 070 A1

| | |
|---|---|
| — — — | 656.2725 NM |
| — ·· — | 587.5618 NM |
| ——— | 546.0740 NM |
| — · — | 486.1327 NM |
| ········· | 435.8343 NM |

LONGITUDINAL SPHERICAL ABERRATION

ASTIGMATISM

DISTORTION

Y   X   IMG HT

1.00

0.75

0.50

0.25

-0.050  -0.025   0.0    0.025   0.050

FOCUS (MILLIMETERS)

IMG HT

3.05

2.29

1.52

0.76

-0.050  -0.025   0.0    0.025   0.050

FOCUS (MILLIMETERS)

IMG HT

3.05

2.29

1.52

0.76

-5.0   -2.5    0.0    2.5    5.0

% DISTORTION

EP 4 318 070 A1

# FIG. 9

FIG. 10

# FIG. 11

EP 4 318 070 A1

| | |
|---|---|
| — — | 656.2725 NM |
| — ·· — | 587.5618 NM |
| —— | 546.0740 NM |
| — — | 486.1327 NM |
| ········ | 435.8343 NM |

LONGITUDINAL SPHERICAL ABERRATION

ASTIGMATISM

Y    X

IMG HT

3.05

2.29

0.50

0.75

1.00

0.25

DISTORTION

IMG HT

3.05

2.29

1.52

0.76

-0.050  -0.025   0.0    0.025   0.050
FOCUS (MILLIMETERS)

-0.050  -0.025   0.0    0.025   0.050
FOCUS (MILLIMETERS)

-5.0   -2.5    0.0    2.5    5.0
% DISTORTION

FIG. 12

Legend:
- 656.2725 NM
- 587.5618 NM
- 546.0740 NM
- 486.1327 NM
- 435.8343 NM

LONGITUDINAL SPHERICAL ABERRATION
FOCUS (MILLIMETERS)

ASTIGMATISM
FOCUS (MILLIMETERS)

DISTORTION
% DISTORTION

EP 4 318 070 A1

# FIG. 13

# FIG. 14

EP 4 318 070 A1

FIG. 15

656.2725 NM
587.5618 NM
546.0740 NM
486.1327 NM
435.8343 NM

LONGITUDINAL SPHERICAL ABERRATION

ASTIGMATISM

DISTORTION

EP 4 318 070 A1

# FIG. 16

EP 4 318 070 A1

LONGITUDINAL SPHERICAL ABERRATION

ASTIGMATISM

DISTORTION

656.2725 NM
587.5618 NM
546.0740 NM
486.1327 NM
435.8343 NM

EP 4 318 070 A1

# FIG. 17

# FIG. 18

EP 4 318 070 A1

# FIG. 19

EP 4 318 070 A1

| | |
|---|---|
| --- | 656.2725 NM |
| ---- | 587.5618 NM |
| —— | 546.0740 NM |
| ---- | 486.1327 NM |
| ········ | 435.8343 NM |

LONGITUDINAL SPHERICAL ABERRATION

ASTIGMATISM

DISTORTION

Y  X   IMG HT

IMG HT

FOCUS (MILLIMETERS)

FOCUS (MILLIMETERS)

% DISTORTION

FIG. 20

| | |
|---|---|
| --- | 656.2725 NM |
| --·--· | 587.5618 NM |
| —— | 546.0740 NM |
| --- | 486.1327 NM |
| ······· | 435.8343 NM |

LONGITUDINAL SPHERICAL ABERRATION

ASTIGMATISM

DISTORTION

Y    X    IMG HT

IMG HT

1.00

0.75

0.50

0.25

3.05

2.29

1.52

0.76

3.05

2.29

1.52

0.76

-0.050 -0.025  0.0  0.025  0.050
FOCUS (MILLIMETERS)

-0.050 -0.025  0.0  0.025  0.050
FOCUS (MILLIMETERS)

-5.0  -2.5  0.0  2.5  5.0
% DISTORTION

EP 4 318 070 A1

# FIG. 21

EP 4 318 070 A1

# FIG. 22

EP 4 318 070 A1

# FIG. 23

EP 4 318 070 A1

FIG. 24

500

480

CAMERA MODULE

520

FLASH

510

LENS
ASSEMBLY

530

IMAGE SENSOR

540

IMAGE STABILIZER

550

MEMORY

560

IMAGE SIGNAL
PROCESSOR

# FIG. 25

2500

| RECEIVE, BY FIRST LENS, LIGHT THROUGH STOP | 2501 |

↓

| REFRACT, BY FIRST LENS, LIGHT TO SECOND LENS | 2502 |

↓

| REFRACT, BY SECOND LENS, LIGHT TO THIRD LENS | 2503 |

↓

| REFRACT, BY THIRD LENS, LIGHT TO FOURTH LENS | 2504 |

↓

| REFRACT, BY FOURTH LENS, LIGHT TO FIFTH LENS | 2505 |

↓

| REFRACT, BY FIFTH LENS, LIGHT TO SIXTH LENS | 2506 |

↓

| REFRACT, BY SIXTH LENS, LIGHT TO SEVENTH LENS | 2507 |

↓

| LIGHT REFRACTED FROM SEVENTH LENS FORMS IMAGE ON IMAGE PLANE | 2508 |

↓

| CAPTURE IMAGE BY USING LIGHT RECEIVED THROUGH IMAGE PLANE | 2509 |

## INTERNATIONAL SEARCH REPORT

| International application No. |
| --- |
| **PCT/KR2022/007492** |

**A. CLASSIFICATION OF SUBJECT MATTER**

**G02B 15/14**(2006.01)i; **G02B 13/00**(2006.01)i; **G02B 15/22**(2006.01)i; **G02B 3/00**(2006.01)i; **G02B 27/64**(2006.01)i; **G02B 1/04**(2006.01)i; **H04N 5/225**(2006.01)i; **G03B 17/12**(2006.01)i

According to International Patent Classification (IPC) or to both national classification and IPC

**B. FIELDS SEARCHED**

Minimum documentation searched (classification system followed by classification symbols)

G02B 15/14(2006.01); G02B 13/00(2006.01); G02B 13/18(2006.01); G02B 15/16(2006.01); G02B 15/20(2006.01); G02B 27/64(2006.01); G02B 9/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제3렌즈군(3rd lens group), 반사부재(reflection member), 줌(zoom), 전자장치 (electronic device)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2019-0032905 A (SAMSUNG ELECTRONICS CO., LTD.) 28 March 2019 (2019-03-28) See paragraphs [0037]-[0147], claims 1-8 and figures 1, 19 and 20. | 1-15 |
| Y | KR 10-2001-0030068 A (NIKON CORPORATION) 16 April 2001 (2001-04-16) See paragraphs [0021]-[0147], table 1, claims 1 and 4 and figures 1 and 2. | 1-15 |
| A | KR 10-0398989 B1 (SAMSUNG TECHWIN CO., LTD.) 19 September 2003 (2003-09-19) See paragraphs [0033]-[0039] and figure 1. | 1-15 |
| A | JP 08-082769 A (MINOLTA CO., LTD.) 26 March 1996 (1996-03-26) See claim 1 and figures 1 and 2. | 1-15 |
| A | JP 2004-199099 A (PENTAX CORP.) 15 July 2004 (2004-07-15) See claim 1 and figure 1. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 August 2022** | **24 August 2022** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/007492**

| Patent document cited in search report | | | Publication date (day/month/year) | Patent family member(s) | | | Publication date (day/month/year) |
|---|---|---|---|---|---|---|---|
| KR | 10-2019-0032905 | A | 28 March 2019 | CN | 111133357 | A | 08 May 2020 |
| | | | | EP | 3662314 | A1 | 10 June 2020 |
| | | | | US | 10908387 | B2 | 02 February 2021 |
| | | | | US | 2019-0086638 | A1 | 21 March 2019 |
| | | | | WO | 2019-059610 | A1 | 28 March 2019 |
| KR | 10-2001-0030068 | A | 16 April 2001 | CN | 1283799 | A | 14 February 2001 |
| | | | | JP | 2001-117003 | A | 27 April 2001 |
| | | | | JP | 4724902 | B2 | 13 July 2011 |
| | | | | TW | 468054 | B | 11 December 2001 |
| | | | | US | 6333822 | B1 | 25 December 2001 |
| KR | 10-0398989 | B1 | 19 September 2003 | KR | 10-2002-0066252 | A | 14 August 2002 |
| JP | 08-082769 | A | 26 March 1996 | US | 6204968 | B1 | 20 March 2001 |
| JP | 2004-199099 | A | 15 July 2004 | JP | 09-120028 | A | 06 May 1997 |
| | | | | JP | 3836525 | B2 | 25 October 2006 |

Form PCT/ISA/210 (patent family annex) (July 2019)